# EUROPEAN PATENT APPLICATION

(11) **EP 4 779 953 A1**
(43) Date of publication of application: **22.07.2026**
(21) Application number: 24870902.4
(22) Date of filing: 26.09.2024
(51) Int. Cl.: H04L 67/10

(54) **COMMUNICATION METHOD AND COMMUNICATION APPARATUS USING EDGE COMPUTING**

(30) Priority: 28.09.2023 CN 202311283557
(71) Applicant: HUAWEI TECHNOLOGIES CO., LTD., Shenzhen, Guangdong 518129 (CN)
(72) Inventor: HU, Yajie, Shenzhen, Guangdong 518129 (CN)
(74) Representative: Maiwald GmbH
(86) International application number: PCT/CN2024/121545
(87) International publication number: WO 2025/067363

(57) **Abstract**

This application provides a communication method for edge computing and a communication apparatus. The method includes: A second edge enabler server EES receives a first message sent by a first EES, where the first message carries the following information: an identifier of a UE group and first information of a first edge application server EAS, and the first information includes one or more of the following: a service area, data center information, and performance information; and the first EAS is an EAS used by a first UE, and the UE group includes the first UE and a second UE. This helps the second UE connect to a better EAS to obtain an application service, so as to obtain a better application service.

## Description

This application claims priority to Chinese Patent Application No. 202311283557.6, filed with the China National Intellectual Property Administration on September 28, 2023 and entitled "COMMUNICATION METHOD FOR EDGE COMPUTING AND COMMUNICATION APPARATUS", which is incorporated herein by reference in its entirety.

### TECHNICAL FIELD

This application relates to the field of communication technologies, and in particular, to a communication method for edge computing and a communication apparatus.

### BACKGROUND

An edge data network (edge data network, EDN) includes an edge application server (edge application server, EAS) and an edge enabler server (edge enabler server, EES). An application client (application client, AC) in a UE may connect to the EAS to obtain an application service. Generally, the EAS is registered with one EES, or information about one EAS is configured on one EES via a management system. The EES is referred to as an EES associated with the EAS. The EES controls/manages the EAS registered with/configured on the EES.

The UE needs to discover an EAS before establishing a connection to the EAS, to obtain an application service. An EAS discovered for the UE by using an existing EAS discovery procedure may not enable the UE to obtain a better application service.

### SUMMARY

This application provides a communication method for edge computing and a communication apparatus, to help a UE obtain a better application service.

According to a first aspect, this application provides a communication method for edge computing. The method may be performed by a second EES, may be performed by a module (for example, a processor, a chip, or a chip system) used in the second EES, or may be implemented by a logical node, a logical module, or software that can implement all or some functions of the second EES. The method includes the following steps.

The second edge enabler server EES receives a first message sent by a first EES, where the first message carries the following information: an identifier of a UE group and first information of a first edge application server EAS, and the first information includes one or more of the following: a service area, data center information, and performance information; and the first EAS is an EAS used by a first UE, and the UE group includes the first UE and a second UE.

It can be learned that, according to the method described in the first aspect, the second EES may receive the service area and/or the data center information and/or the performance information that correspond/corresponds to the first EAS used by the first UE and that are/is sent by the first EES, so that the second EES can determine, based on the service area and/or the data center information and/or the performance information corresponding to the first EAS used by the first UE, whether the second UE in the same UE group as the first UE uses the first EAS, instead of directly determining the first EAS used by the first UE as an EAS used by the second UE. This helps the second UE connect to a better EAS to obtain an application service, so as to obtain a better application service.

In a possible embodiment, the method further includes: The second EES receives a second message sent by the second UE, where the second message is used to request to discover an EAS, the second message carries information about the second UE, and the information about the second UE includes location information and/or application information corresponding to the second UE. The second EES determines, based on the information about the second UE and the first information of the first EAS, whether the second UE uses the first EAS.

Based on this possible embodiment, the second EES may determine, based on the service area and/or the data center information and/or the performance information corresponding to the first EAS used by the first UE, whether the second UE in the same UE group as the first UE uses the first EAS, instead of directly determining the first EAS used by the first UE as an EAS used by the second UE. This helps the second UE connect to a better EAS to obtain an application service, so as to obtain a better application service.

In a possible embodiment, a specific implementation in which the second EES determines, based on the information about the second UE and the first information of the first EAS, whether the second UE uses the first EAS is as follows: The second EES determines a second EAS based on the information about the second UE. The second EES determines, based on the first information of the first EAS and first information of the second EAS, whether the second UE uses the first EAS or the second EAS.

Based on this possible embodiment, the second UE can connect to a better EAS to obtain an application service, so as to obtain a better application service.

In a possible embodiment, that the second EES determines, based on the first information of the first EAS and the first information of the second EAS, whether the second UE uses the first EAS or the second EAS includes: The second EES may determine, based on the first information of the second EAS, the first information of the first EAS, and delay information or response time information between a data center corresponding to the first EAS/first EES and a data center corresponding to the second EAS/second EES, or delay information or response time information between the first EAS/first EES and the second EAS/second EES, whether the second UE uses the first EAS or the second EAS.

Optionally, the delay information or the response time information between the data center corresponding to the first EAS/first EES and the data center corresponding to the second EAS/second EES may be preconfigured in the second EES and/or the first EES. Optionally, the delay information or the response time information between the first EAS/first EES and the second EAS/second EES may be preconfigured in the second EES and/or the first EES.

In a possible embodiment, the first message further carries second information of the first EAS, and the second information of the first EAS includes an identifier of the first EAS and/or address information of the first EAS. The method further includes: The second EES sends a second response message corresponding to the second message to the second UE, where if it is determined that the second UE uses the first EAS, the second response message carries the second information of the first EAS; or if it is determined that the second UE uses the second EAS, the second response message carries second information of the second EAS, where the second information of the second EAS includes an identifier of the second EAS and/or address information of the second EAS.

Based on this possible embodiment, the second UE can be notified of address information and/or an identifier of the EAS used by the second UE, so that the second UE communicates with the EAS used by the second UE.

In a possible embodiment, the method further includes: If determining that the second UE uses the second EAS, the second EES sends the second information of the first EAS to the second EAS; or if determining that the second UE uses the second EAS, the second EES sends the second information of the second EAS to the first EES.

Based on this possible embodiment, if the second UE uses the second EAS, application context synchronization may be performed between the second EAS and the first EAS, to ensure data consistency between different UEs in a same UE group, so that a service of a UE in the UE group can be normally performed.

In a possible embodiment, if it is determined that the second UE uses the second EAS, the second response message further carries the second information of the first EAS. The method further includes: The second EES sends the second information of the second EAS to the first EES if determining that the second UE uses the second EAS.

Based on this possible embodiment, if the second UE uses the second EAS, application context synchronization may be performed between the second EAS and the first EAS, to ensure data consistency between different UEs in a same UE group, so that a service of a UE in the UE group can be normally performed. In addition, the second response message further carries the second information of the first EAS, so that the second information of the first EAS may be sent to the second EAS through an application layer of the second UE.

In a possible embodiment, if it is determined that the second UE uses the second EAS, the second response message further carries indication information, where the indication information indicates that the second EAS needs to perform application context synchronization with the first EAS.

In a possible embodiment, the method further includes: The second EES receives a second message sent by the second UE, where the second message is used to request to discover an EAS, the second message carries information about the second UE, and the information about the second UE includes location information and/or application information corresponding to the second UE. The second EES determines a second EAS based on the information about the second UE. The second EES sends a second response message corresponding to the second message to the second UE, where the second response message carries the first information of the first EAS and first information of the second EAS.

Based on this possible embodiment, the second UE may determine, based on the service area and/or the data center information and/or the performance information corresponding to the first EAS used by the first UE, whether the second UE uses the first EAS, instead of directly determining the first EAS used by the first UE as an EAS used by the second UE. This helps the second UE connect to a better EAS to obtain an application service, so as to obtain a better application service.

In a possible embodiment, the second response message may further carry delay information or response time information between a data center corresponding to the first EAS/first EES and a data center corresponding to the second EAS/second EES, or delay information or response time information between the first EAS/first EES and the second EAS/second EES.

In a possible embodiment, the second response message further carries second information of the first EAS and second information of the second EAS, the second information of the first EAS includes an identifier of the first EAS and/or address information of the first EAS, and the second information of the second EAS includes an identifier of the second EAS and/or address information of the second EAS.

Based on this possible embodiment, the second UE can be notified of address information and/or an identifier of the EAS used by the second UE, so that the second UE communicates with the EAS used by the second UE.

In a possible embodiment, the method further includes: The second EES receives second information of the EAS used by the second UE and/or indication information that are/is sent by the second UE, where the indication information indicates whether the second UE uses the first EAS or indicates whether application context synchronization needs to be performed, and the EAS used by the second UE is one of the second EAS and the first EAS; and
the second EES sends the second information of the second EAS to the first EES if the second EES determines, based on the information about the EAS used by the second UE and/or the indication information, that context synchronization needs to be performed between the first EAS and the second EAS.

Based on this possible embodiment, if the second UE uses the second EAS, application context synchronization may be performed between the second EAS and the first EAS, to ensure data consistency between different UEs in a same UE group, so that a service of a UE in the UE group can be normally performed.

In a possible embodiment, the method further includes: The second EES sends the second information of the first EAS to the second EAS if the second EES determines, based on the information about the EAS selected by the second UE and/or the indication information, that context synchronization needs to be performed between the first EAS and the second EAS.

Based on this possible embodiment, if the second UE uses the second EAS, application context synchronization may be performed between the second EAS and the first EAS, to ensure data consistency between different UEs in a same UE group, so that a service of a UE in the UE group can be normally performed.

According to a second aspect, this application provides a communication method for edge computing. The method may be performed by a first EES, may be performed by a module (for example, a processor, a chip, or a chip system) used in the first EES, or may be implemented by a logical node, a logical module, or software that can implement all or some functions of the first EES. The method includes the following steps.

The first edge enabler server EES sends a first message to a second EES, where the first message carries the following information: an identifier of a UE group and first information of a first EAS, and the first information includes one or more of the following: a service area, data center information, and performance information; and the first EAS is an EAS used by a first UE, and the UE group includes the first UE and a second UE.

In a possible embodiment, the method further includes: The first EES receives second information of a second EAS sent by the second EES, where the second information of the second EAS includes an identifier of the second EAS and/or address information of the second EAS, and the second EAS is an EAS used by the second UE. The first EES sends the second information of the second EAS to the first EAS.

According to a third aspect, this application provides a communication method for edge computing. The method may be performed by a second UE, may be performed by a module (for example, a processor, a chip, or a chip system) used in the second UE, or may be implemented by a logical node, a logical module, or software that can implement all or some functions of the second UE. The method includes the following steps.

The second user equipment UE sends a second message to a second edge enabler server EES, where the second message is used to request to discover an EAS, the second message carries information about the second UE, and the information about the second UE includes location information and/or application information corresponding to the second UE. The second UE receives a second response message that corresponds to the second message and that is sent by the second EES, where the second response message carries first information of a first EAS and first information of a second EAS, and the first information includes one or more of the following: a service area, corresponding data center information, and performance information; and the first EAS is an EAS used by a first UE, and a UE group includes the first UE and the second UE. The second UE determines, based on the first information of the first EAS and the first information of the second EAS, whether the second UE uses the first EAS or the second EAS.

Optionally, the second response message may further carry delay information or response time information between a data center corresponding to the first EAS/first EES and a data center corresponding to the second EAS/second EES, or delay information or response time information between the first EAS/first EES and the second EAS/second EES. That the second UE determines, based on the first information of the first EAS and the first information of the second EAS, whether the second UE uses the first EAS or the second EAS includes: The second UE determines, based on the first information of the first EAS, the first information of the second EAS, and the delay information or the response time information between the data center corresponding to the first EAS/first EES and the data center corresponding to the second EAS/second EES, or the delay information or the response time information between the first EAS/first EES and the second EAS/second EES, whether to use the first EAS or the second EAS.

Optionally, the delay information or the response time information between the data center corresponding to the first EAS/first EES and the data center corresponding to the second EAS/second EES may be preconfigured in the second EES and/or the first EES. Optionally, the delay information or the response time information between the first EAS/first EES and the second EAS/second EES may be preconfigured in the second EES and/or the first EES.

In a possible embodiment, the second response message further carries second information of the first EAS and second information of the second EAS, the second information of the first EAS includes an identifier of the first EAS and/or address information of the first EAS, and the second information of the second EAS includes an identifier of the second EAS and/or address information of the second EAS. The method further includes: If determining that the second UE uses the first EAS, the second UE communicates with the first EAS based on the second information of the first EAS; or if determining that the second UE uses the second EAS, the second UE communicates with the second EAS based on the second information of the second EAS.

In a possible embodiment, the method further includes: The second UE sends, to the second EES, second information of an EAS used by the second UE and/or indication information, where the indication information indicates whether the second UE uses the first EAS or indicates whether application context synchronization needs to be performed.

In a possible embodiment, the method further includes: If determining that the second UE uses the second EAS, the second UE sends the second information of the first EAS to the second EAS.

According to a fourth aspect, this application provides a communication method for edge computing. The method may be performed by a first EAS, may be performed by a module (for example, a processor, a chip, or a chip system) used in the first EAS, or may be implemented by a logical node, a logical module, or software that can implement all or some functions of the first EAS. The method includes the following steps.

The first edge application server EAS receives second information of a second EAS sent by a first edge enabler server EES, where the second information of the second EAS includes an identifier of the second EAS and/or address information of the second EAS, the first EAS is an EAS used by a first UE, the second EAS is an EAS used by a second UE, and the first UE and the second UE are included in a UE group. The first EAS synchronizes, based on the second information of the second EAS, an application context corresponding to the UE group with the second EAS.

According to a fifth aspect, this application provides a communication method for edge computing. The method may be performed by a second UE, may be performed by a module (for example, a processor, a chip, or a chip system) used in the second UE, or may be implemented by a logical node, a logical module, or software that can implement all or some functions of the second UE. The method includes the following steps.

The second user equipment UE sends a second message to a second edge enabler server EES, where the second message is used to request to discover an EAS, the second message carries information about the second UE, and the information about the second UE includes location information and/or application information corresponding to the second UE. The second UE receives a second response message that corresponds to the second message and that is sent by the second EES, where the second response message carries second information of a second EAS and second information of a first EAS, the second EAS is an EAS used by the second UE, and the first EAS is an EAS used by a first UE, and the first UE and the second UE are included in a UE group; and the second information of the first EAS includes an identifier of the first EAS and/or address information of the first EAS, and the information about the second EAS includes an identifier of the second EAS and/or address information of the second EAS. The second UE sends the second information of the first EAS to the second EAS.

In a possible embodiment, the second response message further carries indication information, where the indication information indicates that the second EAS needs to perform application context synchronization with the first EAS.

According to a sixth aspect, this application provides a communication method for edge computing. The method may be performed by a second EAS, may be performed by a module (for example, a processor, a chip, or a chip system) used in the second EAS, or may be implemented by a logical node, a logical module, or software that can implement all or some functions of the second EAS. The method includes the following steps.

The second edge application server EAS receives information about a first EAS sent by a second edge enabler server EES or a second user equipment UE, where the information about the first EAS includes an identifier of the first EAS and/or address information of the first EAS, the first EAS is an EAS used by a first UE, the second EAS is an EAS used by the second UE, and the first UE and the second UE are included in a UE group. The second EAS synchronizes, based on second information of the first EAS, an application context corresponding to the UE group with the first EAS.

For beneficial effects of the second aspect to the sixth aspect, refer to the beneficial effects of the first aspect. Details are not described herein.

According to a seventh aspect, this application provides a communication method for edge computing. The method may be performed by a first EES, may be performed by a module (for example, a processor, a chip, or a chip system) used in the first EES, or may be implemented by a logical node, a logical module, or software that can implement all or some functions of the first EES. The method includes the following steps.

The first edge enabler server EES sends a first message to a second EES, where the first message carries second information of a first edge application server EAS, the second information includes an identifier and/or address information, and the first EAS is an EAS used by a first UE. The first EES receives a second message sent by the second EES, where the second message carries an identifier of a second UE and first information of a second EAS, and the first information includes one or more of the following: a service area, data center information, and performance information. The first EES determines, based on first information of the first EAS and the first information of the second EAS, whether the second UE uses the first EAS or the second EAS, where the first UE and the second UE are included in a same UE group.

It can be learned that, according to the method described in the seventh aspect, the first EES may determine, based on a service area and/or data center information and/or performance information corresponding to the first EAS used by the first UE, and the service area and/or the data center information and/or the performance information corresponding to the second EAS used by the second UE, whether the second UE in the same UE group as the first UE uses the first EAS, instead of directly determining the first EAS used by the first UE as an EAS used by the second UE. This helps the second UE connect to a better EAS to obtain an application service, so as to obtain a better application service.

In a possible embodiment, the second message further carries information about the second UE, and the information about the second UE includes location information and/or application information corresponding to the second UE. That the first EES determines, based on the first information of the first EAS and the first information of the second EAS, whether the second UE uses the first EAS or the second EAS includes: The first EES determines, based on the information about the second UE, the first information of the first EAS, and the first information of the second EAS, whether the second UE uses the first EAS or the second EAS.

Based on this possible embodiment, the second UE can connect to a better EAS to obtain an application service, so as to obtain a better application service.

In a possible embodiment, that the first EES determines, based on the first information of the first EAS and the first information of the second EAS, whether the second UE uses the first EAS or the second EAS includes: The first EES determines, based on the first information of the first EAS, the first information of the second EAS, and the delay information or the response time information between the data center corresponding to the first EAS/first EES and the data center corresponding to the second EAS/second EES, or the delay information or the response time information between the first EAS/first EES and the second EAS/second EES, whether to use the first EAS or the second EAS.

Optionally, the delay information or the response time information between the data center corresponding to the first EAS/first EES and the data center corresponding to the second EAS/second EES may be preconfigured in the first EES. Optionally, the delay information or the response time information between the first EAS/first EES and the second EAS/second EES may be preconfigured in the first EES.

Optionally, the second message may further carry delay information or response time information between a data center corresponding to the first EAS/first EES and a data center corresponding to the second EAS/second EES, or delay information or response time information between the first EAS/first EES and the second EAS/second EES. Optionally, the delay information or the response time information between the data center corresponding to the first EAS/first EES and the data center corresponding to the second EAS/second EES may be preconfigured in the second EES. Optionally, the delay information or the response time information between the first EAS/first EES and the second EAS/second EES may be preconfigured in the second EES.

In a possible embodiment, the second message further carries second information of the second EAS. The method further includes: The first EES sends a second response message corresponding to the second message to the second EES, where the second response message carries the identifier of the second UE and second information of the EAS used by the second UE.

Based on this possible embodiment, the second UE can be notified of address information and/or an identifier of the EAS used by the second UE, so that the second UE communicates with the EAS used by the second UE.

In a possible embodiment, the method further includes: If determining that the second UE uses the second EAS, the first EES sends the second information of the second EAS to the first EAS.

Based on this possible embodiment, if the second UE uses the second EAS, application context synchronization may be performed between the second EAS and the first EAS, to ensure data consistency between different UEs in a same UE group, so that a service of a UE in the UE group can be normally performed.

In a possible embodiment, if it is determined that the second UE uses the second EAS, the second response message further carries indication information, where the indication information indicates that the second EAS needs to perform application context synchronization with a common EAS.

According to an eighth aspect, this application provides a communication method for edge computing. The method may be performed by a second EES, may be performed by a module (for example, a processor, a chip, or a chip system) used in the second EES, or may be implemented by a logical node, a logical module, or software that can implement all or some functions of the second EES. The method includes the following steps.

The second edge enabler server EES receives a first message sent by a first EES, where the first message carries second information of a first edge application server EAS, the second information includes an identifier and/or address information, and the first EAS is an EAS used by a first UE. The second EES receives a third message sent by a second UE, where the third message is used to request to discover an EAS, the second message carries information about the second UE, the information about the second UE includes location information and/or application information corresponding to the second UE, and the first UE and the second UE are included in a same UE group. The second EES determines a second EAS based on the information about the second UE. The second EES sends a second message to the first EES, where the second message carries an identifier of the second UE and first information of the second EAS, and the first information includes one or more of the following: a service area, data center information, and performance information.

In a possible embodiment, the second message further carries information about the second UE, and the information about the second UE includes location information and/or application information corresponding to the second UE.

In a possible embodiment, the second message may further carry delay information or response time information between a data center corresponding to the first EAS/first EES and a data center corresponding to the second EAS/second EES, or delay information or response time information between the first EAS/first EES and the second EAS/second EES.

Optionally, the delay information or the response time information between the data center corresponding to the first EAS/first EES and the data center corresponding to the second EAS/second EES may be preconfigured in the second EES. Optionally, the delay information or the response time information between the first EAS/first EES and the second EAS/second EES may be preconfigured in the second EES.

In a possible embodiment, the second message further carries second information of the second EAS, and the method further includes:

The second EES receives a second response message that corresponds to the second message and that is sent by the first EES, where the second response message carries the identifier of the second UE and second information of an EAS used by the second UE, and the EAS used by the second UE is the second EAS or the first EAS. The second EES sends a fourth message to the second UE, where the fourth message carries the second information of the EAS used by the second UE.

In a possible embodiment, the EAS used by the second UE is the second EAS, and the method further includes: The second EES sends second information of the first EAS to the second EAS.

In a possible embodiment, the EAS used by the second UE is the second EAS, and the fourth message further carries the second information of the first EAS.

In a possible embodiment, the fourth message further carries indication information, where the indication information indicates that the second EAS needs to perform application context synchronization with the first EAS.

In a possible embodiment, the second response message further carries indication information, where the indication information indicates that the second EAS needs to perform application context synchronization with the first EAS.

According to a ninth aspect, this application provides a communication method for edge computing. The method may be performed by a second UE, may be performed by a module (for example, a processor, a chip, or a chip system) used in the second UE, or may be implemented by a logical node, a logical module, or software that can implement all or some functions of the second UE. The method includes the following steps.

The second UE sends a third message to a second EES, where the third message is used to request to discover an EAS, the second message carries information about the second UE, and the information about the second UE includes location information and/or application information corresponding to the second UE. The second UE receives a fourth message sent by the second EES, where the fourth message carries second information of an EAS used by the second UE and second information of a first EAS, the second information includes an identifier and/or address information, the EAS used by the second UE is a second EAS, the first EAS is an EAS used by a first UE, and the first UE and the second UE are included in a same UE group. The second UE sends the second information of the first EAS to the second EAS.

In a possible embodiment, the fourth message further carries indication information, where the indication information indicates that the second EAS needs to perform application context synchronization with the first EAS.

For beneficial effects of the eighth aspect and the ninth aspect, refer to the beneficial effects of the seventh aspect. Details are not described herein.

According to a tenth aspect, this application provides a communication apparatus. For example, the communication apparatus may be a first EES, may be a module used in the first EES, for example, a processor, a chip, or a chip system, or may be a logical node, a logical module, or software that can implement all or some functions of the first EES.

For another example, the communication apparatus may be a second EES, may be a module used in the second EES, for example, a processor, a chip, or a chip system, or may be a logical node, a logical module, or software that can implement all or some functions of the second EES.

For another example, the communication apparatus may be a second UE, may be a module used in the second UE, for example, a processor, a chip, or a chip system, or may be a logical node, a logical module, or software that can implement all or some functions of the second UE.

For another example, the communication apparatus may be a first EAS, may be a module used in the first EAS, for example, a processor, a chip, or a chip system, or may be a logical node, a logical module, or software that can implement all or some functions of the first EAS.

For another example, the communication apparatus may be a second EAS, may be a module used in the second EAS, for example, a processor, a chip, or a chip system, or may be a logical node, a logical module, or software that can implement all or some functions of the second EAS.

The communication apparatus includes a module/unit configured to perform any method according to any one of the first aspect to the ninth aspect and the possible implementations of the first aspect to the ninth aspect.

According to an eleventh aspect, this application provides a communication apparatus, including a processor. The processor is coupled to a memory, the memory is configured to store a program or instructions, and when the program or the instructions are executed by the processor, the apparatus is caused to perform the method according to any one of the first aspect to the ninth aspect.

According to a twelfth aspect, this application provides a chip. The chip includes a processor and an interface, the processor is coupled to the interface, the interface is configured to receive or output a signal, and the processor is configured to execute code instructions, so that the chip performs the method according to any one of the first aspect to the ninth aspect.

According to a thirteenth aspect, this application provides a computer-readable storage medium. The computer-readable storage medium stores computer-executable instructions, and when the computer-executable instructions are invoked, any one of the first aspect to the ninth aspect is performed.

According to a fourteenth aspect, this application provides a computer program product. The computer program product includes computer program code, and when the computer program code is run, any one of the first aspect to the ninth aspect is performed.

According to a fifteenth aspect, this application provides a communication system. The communication system includes the second EES configured to perform the method according to the first aspect, the first EES configured to perform the method according to the second aspect, the first EAS configured to perform the method according to the fourth aspect, and the second EAS configured to perform the method according to the sixth aspect.

Alternatively, the communication system includes the second EES configured to perform the method according to the first aspect, the first EES configured to perform the method according to the second aspect, the first EAS configured to perform the method according to the fourth aspect, the second UE configured to perform the method according to the fifth aspect, and the second EAS configured to perform the method according to the sixth aspect.

Alternatively, the communication system includes the first EES configured to perform the method according to the first aspect, the first EES configured to perform the method according to the eighth aspect, the second UE configured to perform the method according to the third aspect, the first EAS configured to perform the method according to the fourth aspect, and the second EAS configured to perform the method according to the sixth aspect.

Alternatively, the communication system includes the first EES configured to perform the method according to the seventh aspect, the second EES configured to perform the method according to the eighth aspect, the first EAS configured to perform the method according to the fourth aspect, and the second EAS configured to perform the method according to the sixth aspect.

Alternatively, the communication system includes the first EES configured to perform the method according to the seventh aspect, the second EES configured to perform the method according to the eighth aspect, the first EAS configured to perform the method according to the fourth aspect, the second EAS configured to perform the method according to the sixth aspect, and the second UE configured to perform the method according to the ninth aspect.

### BRIEF DESCRIPTION OF DRAWINGS

FIG. 1 is a diagram of a system architecture according to this application;
FIG. 2 is a diagram in which a UE group connects to EASs according to this application;
FIG. 3 is another diagram in which a UE group connects to EASs according to this application;
FIG. 4 is a schematic flowchart of a communication method for edge computing according to this application;
FIG. 5 is a schematic flowchart of a communication method for edge computing according to this application;
FIG. 6A and FIG. 6B are a schematic flowchart of a communication method for edge computing according to this application;
FIG. 7A and FIG. 7B are a schematic flowchart of a communication method for edge computing according to this application;
FIG. 8 is a schematic flowchart of a communication method for edge computing according to this application;
FIG. 9A and FIG. 9B are a schematic flowchart of a communication method for edge computing according to this application;
FIG. 10A and FIG. 10B are a schematic flowchart of a communication method for edge computing according to this application;
FIG. 11 is a schematic flowchart of a communication method for edge computing according to this application;
FIG. 12A to FIG. 12C are a schematic flowchart of a communication method for edge computing according to this application;
FIG. 13A to FIG. 13C are a schematic flowchart of a communication method for edge computing according to this application;
FIG. 14 is a diagram of a structure of a communication apparatus according to this application; and
FIG. 15 is a diagram of a structure of another communication apparatus according to this application.

### DESCRIPTION OF EMBODIMENTS

The following further describes specific embodiments of this application in detail with reference to accompanying drawings.

Terms "first", "second", and the like in this specification, the claims, and the accompanying drawings of this application are used to distinguish between different objects, but are not used to describe a specific sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned herein mean that specific features, structures, or characteristics described in combination with embodiments may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in this specification may be combined with another embodiment.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

To enable UE to obtain a better application service, embodiments of this application provide a communication method for edge computing and a communication apparatus. To better understand embodiments of this application, the following first describes a system architecture in embodiments of this application.

The technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, a future communication system, and the like.

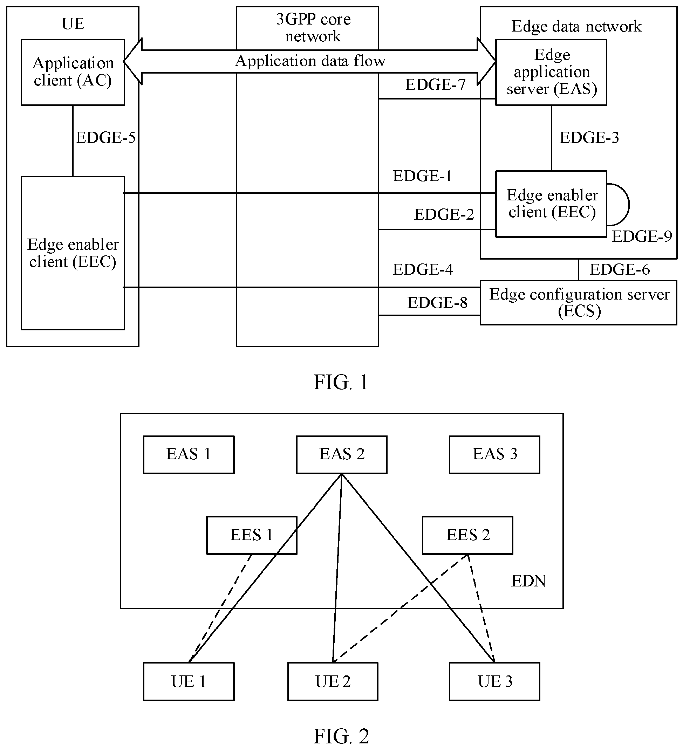

FIG. 1 is a diagram of a system architecture according to an embodiment of this application. As shown in FIG. 1, the system architecture includes a user equipment (user equipment, UE), a 3rd generation partnership project core network (3rd generation partnership project core network, 3GPP CN), an edge data network (edge data network, EDN), and an edge configuration server (edge configuration server, ECS). The UE may include an application client (application client, AC) and an edge enabler client (edge enabler client, EEC). The EDN may include an edge application server (edge application server, EAS) and an edge enabler server (edge enabler server, EES).

### 1. User equipment

The user equipment includes a device that provides voice and/or data connectivity for a user. For example, the user equipment is a device that has a wireless transceiver function; and may be deployed on land, where the deployment includes indoor, outdoor, handheld, wearable, or vehicle-mounted deployment, may be deployed on water (for example, on a ship), or may be deployed in the air (for example, on an airplane, a balloon, and a satellite). The user equipment may be a mobile phone (mobile phone), a tablet computer (Pad), a computer with a wireless transceiver function, a virtual reality (VR) user equipment, an augmented reality (AR) user equipment, a wireless terminal in industrial control (industrial control), a vehicle-mounted user equipment, a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable user equipment, or the like. An application scenario is not limited in embodiments of this application. The terminal may also be sometimes referred to as a terminal device, a terminal, an access user equipment, a vehicle-mounted terminal, an industrial control terminal, a UE unit, a UE station, a mobile station, a remote station, a remote user equipment, a mobile device, a UE user equipment, a wireless communication device, a UE agent, a UE apparatus, or the like. The user equipment may also be fixed or mobile. In this application, a UE is used to represent a user equipment in the following.

### 2. EDN

A general understanding is that the EDN corresponds to a data network, is a special local data network (local DN), includes an edge enabler function, and may be identified by using a data network access identifier (data network access identifier, DNAI) and a data network name (data network name, DNN) identifier. This is a network logical concept. In another understanding of the EDN, the EDN is a peer concept of a central cloud. The EDN may be understood as a local data center (a geographical location concept), may be identified by using a DNAI, and may include a plurality of local data networks (local DNs).

### 2. EAS

An application deployed in the edge data network is referred to as an application instance. The EAS may also be referred to as an edge application (server), an application instance, an edge application instance, an MEC application (server), an EAS function, or the like. The application instance specifically refers to an instance (instance) of a server application program (for example, social media software, augmented reality (augmented reality, AR), or virtual reality (virtual reality, VR)) deployed and run in the EDN. One or more EASs may be deployed for one application in one or more EDNs. EASs deployed and run in different EDNs may be considered as different EASs of one application. The EASs may share one domain name, and may use one IP address or different IP addresses.

### 3. AC

The AC is a peer entity of the EAS on the UE side. The AC is used by an application user (user) to obtain an application service from the EAS. The AC is a client program of an application on the terminal side. The AC may connect to an EAS on a cloud to obtain an application service, or may connect to an EAS deployed and run in one or more EDNs to obtain an application service.

### 4. EES

The EES may provide some enabler capabilities for the EAS deployed in the EDN, to better support deployment of an application in the MEC. The EES may support registration of the edge application, support authentication and authorization for the UE, provide IP address information of the EAS for the UE, and the like. The EES may further support obtaining of an identifier and IP address information of the EAS, and further send the identifier and the IP address information of the EAS to the ECS. The EES is deployed in the EDN. Generally, the EAS is registered with one EES, or information about one EAS is configured on one EES via a management system. The EES is referred to as an EES associated with the EAS. The EES controls/manages the EAS registered with/configured on the EES.

### 5. EEC

The EEC is a peer entity of the EES on the UE side. The EEC may be configured to register information about the EEC and information about the AC with the EES, perform security authentication and authorization, obtain an IP address of the EAS from the EES, and provide an edge computing enabler capability for the AC. For example, the EEC may return the IP address of the EAS to the AC by using an EAS discovery service.

### 6. ECS

The ECS is responsible for configuration of the EDN, for example, providing information about the EES for the UE. The ECS may further directly provide information about the EAS for the UE, and interact with a DNS of an application to obtain the information about the EAS. Further, the ECS may obtain and store the information about the EAS and the IP address information of the EAS from another functional entity.

To facilitate understanding of the solutions provided in embodiments of this application, the following first describes some terms in this application.

### 1. EAS discovery service

An application user signs a service agreement with an application provider, to provide a service for the application user. The application user logs in to an AC on a terminal, and communicates with an EAS over a connection between the AC and the EAS. The EEC is a middleware layer, and is generally located in an operating system, or is located between the AC and the operating system. The AC may obtain an edge enabling service from the EEC through an application programming interface (application programming interface, API). For example, the edge enabling service may include an EAS discovery service.

An EES platform and EAS discovery discover procedure is defined in the 3GPP SA6 standard. The procedure provides EES platform discovery and EAS discovery. In terms of an architecture and a function, a two-level discovery mechanism is designed and used: An EES platform is discovered first, and then an EAS is discovered from the EES platform. For example, the EEC may send a request for discovering an EAS to the EES. After receiving the request, the EES matches, based on information about locally registered/online EASs and a discovery filtering parameter provided by the user, an EAS that meets the user's request. The EES returns information about the EAS to the EEC. The EEC can further provide the information about the EAS for the AC, so that the AC connects to the EAS.

### 2. Cases in which one UE group connects to EASs

A UE group is a group of UEs that use a same application. For example, a plurality of users team up to play a game, and UEs of the plurality of users may form one UE group.

There are the following two cases in which one UE group connects to EASs.

Case 1: One group of UEs may connect to a same EAS, to reduce signaling exchange between EASs. For example, as shown in FIG. 2, an EAS 1 to an EAS 3 are different application instances of a same application. A UE 1 to a UE 3 are UEs in a same UE group. All the UE 1 to the UE 3 connect to the EAS 2. In this way, an application context of the UE group can be prevented from being synchronized between different EASs, to reduce overheads of context synchronization between EASs. In addition, because UEs connect to a same EAS, fairness of a group of UEs can be ensured.

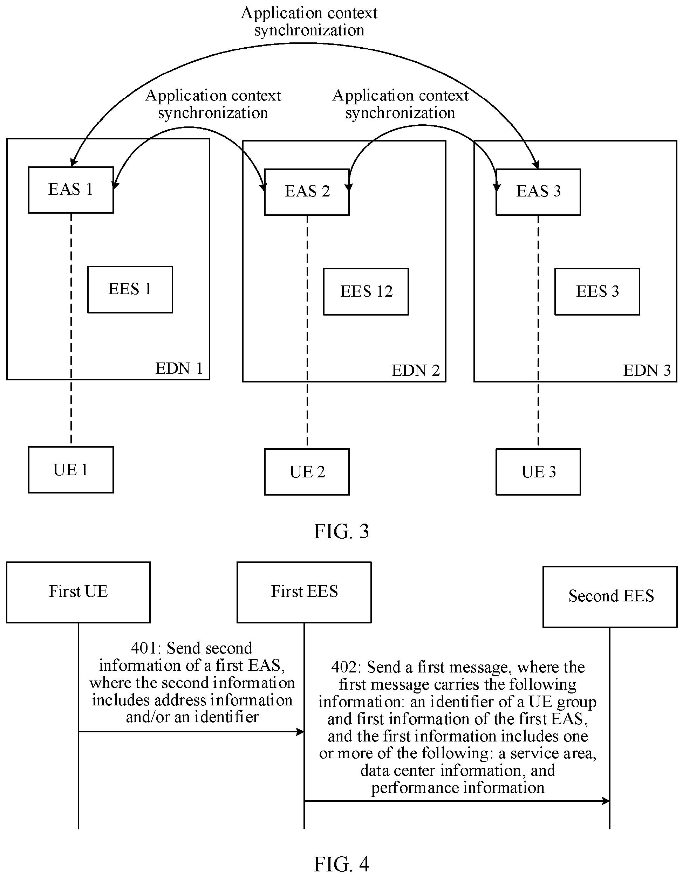

Case 2: A group of UEs may connect to different EASs, and each UE may connect to an EAS that is closer to the UE, to obtain better service performance, for example, an obtained EAS. In this case, an application context needs to be synchronized between EASs, to ensure normal service execution of the UEs in the UE group. For example, as shown in FIG. 3, an EAS 1 to an EAS 3 are different application instances of a same application. The EAS 1 to the EAS 3 have a same EASID/EAS domain name but different EAS instances. In other words, the EAS 1 to the EAS 3 correspond to different address information such as EAS server addresses and EAS IP addresses. A same application may be understood as that EASIDs correspond to ACIDs in one-to-one correspondence, and the EAS and the AC provide a same application service. In consideration of different operating systems, application IDs in the EASID and the ACID correspond to a same application. The EAS 1 to the EAS 3 are located in different EDNs. A UE 1 to a UE 3 are UEs in a same UE group. The UE 1 connects to the EAS 1. The UE 2 connects to the EAS 2. The UE 3 connects to the EAS 3. Because different UEs in a same UE group connect to different EASs, to ensure data consistency, application context synchronization may be performed between every two of the EAS 1 to the EAS 3. The EAS 1 to the EAS 3 may alternatively be located in a same EDN. In FIG. 3, an example in which the EAS 1 to the EAS 3 are located in different EDNs is used.

The following further describes the communication method for edge computing and the communication apparatus with reference to the accompanying drawings. It may be understood that in this application, an example in which a first UE, a first EES, a first EAS, a second UE, a second EES, and a second EAS are used as execution entities for performing interaction. However, the execution entity for performing interaction is not limited in this application. For example, the first UE in the method provided in this application may be a chip, a chip system, or a processor used in the first UE, or may be a logical node, a logical module, or software that can implement all or some functions of the first UE. The same applies to the first EES, the first EAS, the second UE, the second EES, and the second EAS.

FIG. 4 is a schematic flowchart of a communication method for edge computing according to an embodiment of this application.

401: A first UE sends second information of a first EAS to a first EES, where the second information includes address information and/or an identifier. The first EAS is an EAS used by the first UE. Alternatively, the first EAS may be an EAS used by a plurality of UEs in a group of UEs, and the plurality of UEs include the first UE. Correspondingly, the first EES may receive the second information of the first EAS.

The first UE is any UE in a UE group. The UE group includes a plurality of UEs. All the UEs in the UE group use a same application. The application may correspond to a plurality of EASs. The plurality of EASs include the first EAS and another EAS.

In this embodiment of this application, the second information of the first EAS includes the address information of the first EAS and/or the identifier of the first EAS. For example, the address information of the first EAS includes an IP address and/or endpoint (endpoint) information of the first EAS.

In a possible embodiment, the second information may be carried in an EAS information provisioning request (EAS info provisioning request).

For example, the first UE may first send an EAS discovery request (EAS discovery request) to the first EES, where the request is used to request to discover an EAS, and the request may carry an identifier of the first UE, an identifier of the UE group, and information about the first UE. The information about the first UE may include location information of the first UE and/or application information corresponding to the first UE. Optionally, the application information corresponding to the first UE may be an application client profile (AC profile) or an EAS discovery requirement. For example, the AC profile may include one or more information elements in the following Table 1. For example, the EAS discovery requirement may include one or more information elements in the following Table 2. After receiving the EAS discovery request, the first EES determines, based on the information about the first UE, an EAS that meets an AC requirement corresponding to the first UE. If the first EES determines a plurality of EASs for the first UE, the first EES sends an EAS discovery response (EAS discovery response) to the first UE, where the EAS discovery response carries addresses and/or identifiers of the plurality of EASs. After receiving the EAS discovery response, the first UE selects an EAS from the plurality of EASs, where the EAS is the first EAS. The first UE sends the EAS information provisioning request to the first EES, where the request carries the address information and/or the identifier of the first EAS.

**Table 1**

| Information element | Status | Description |
|---|---|---|
| AC identifier (ACID) | M | Identifier of an AC |
| AC type (AC Type) | O | Category or type (for example, V2X) of the AC. This is an implementation-specific value |
| Expected AC geographical service area (Expected AC Geographical Service Area) | O | Expected location (for example, route) of a primary UE during operation time of the AC, where geographic information may represent a geographic point, a polygon, a route, a signaling map, or a waypoint set |
| AC service continuity support (AC Service Continuity Support) | O | Indicates whether an application needs the service continuity support IE indicates which ACR schemes are supported by the AC, which ACR scenarios are preferred by the AC, and an AC capability of handling bundled EAS ACR (for example, EAS bundle information) |
| List of EASs (List of EASs) | O | List of EASs that serve the AC and service KPIs required by the AC |
| >EAS identifier (EASID) | M | Identifier of an EAS |
| >Expected AC service KPIs (Expected AC Service KPIs) | O | KPIs required by the AC to receive a currently required service from the EAS, as described in Table 8.2.3-1 |
| >Minimum required AC service KPIs (Minimum required AC Service KPIs) | O | Minimum KPIs required by the AC to obtain meaningful services from the EAS, as described in Table 8.2.3-1 |

**Table 2**

| Information element | Status | Description |
|---|---|---|
| List of AC characteristics (List of AC characteristics) | O | Describes an AC for which a matching EAS is needed |
| >AC profile (AC profile) | M | Indicates an AC profile including parameters used to determine the matching EAS. Descriptions are further provided in Table 8.2.2-1 |
| List of EAS characteristics (List of EAS characteristics) | O | Describes a characteristic of a required EAS |
| >EAS identifier (EASID) | O | Identifier of the required EAS |
| >EAS provider identifier (EAS provider identifier) | O | Identifier of a required EAS provider |
| >EAS type (EAS type) | O | Category or type (for example, V2X) of the required EAS |
| >EAS schedule (EAS schedule) | O | Required availability schedule (for example, a time window) of the EAS |
| >EAS geographical service area (EAS Geographical Service Area) | O | Location (for example, a geographical area or a route) where an EAS service should be available |
| >EAS topological service area (EAS Topological Service Area) | O | Topological area (for example, a cell ID or a TAI) for which the EAS service should be available See possible formats in Table 8.2.7-1 |

Step 401 may be optional. For example, if the first EES determines, based on the information about the first UE after receiving the EAS discovery request, that there is only one EAS that meets the requirement of the first UE, the EAS is the first EAS. The first EES sends the EAS discovery response to the first UE, where the EAS discovery response carries the address and/or the identifier of the first EAS; and the first EES performs step 402. The first UE may not send the EAS information provisioning request to the first EES.

402: The first EES sends a first message to a second EES, where the first message carries the following information: the identifier of the UE group and first information of the first EAS, and the first information includes one or more of the following: a service area, data center information, and performance information. The UE group includes the first UE and a second UE. Correspondingly, the second EES may receive the first message.

In a possible embodiment, the first message may be a common EAS announcement request (common EAS announcement request). This is not limited in this patent.

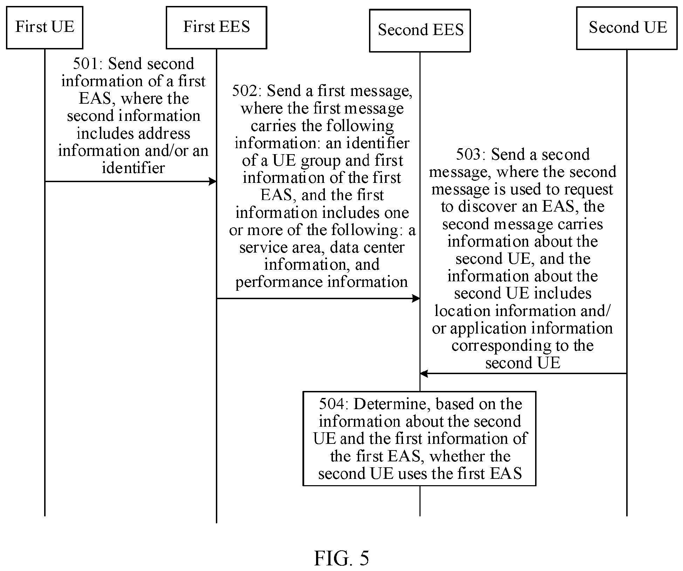

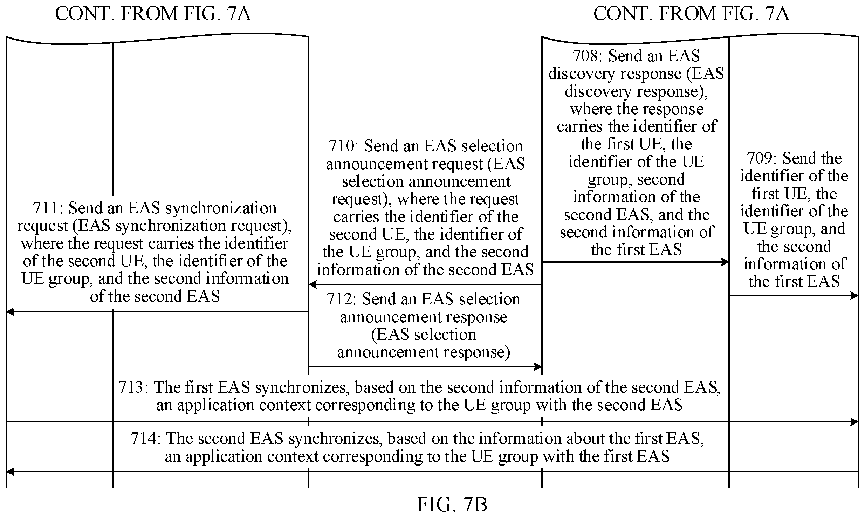

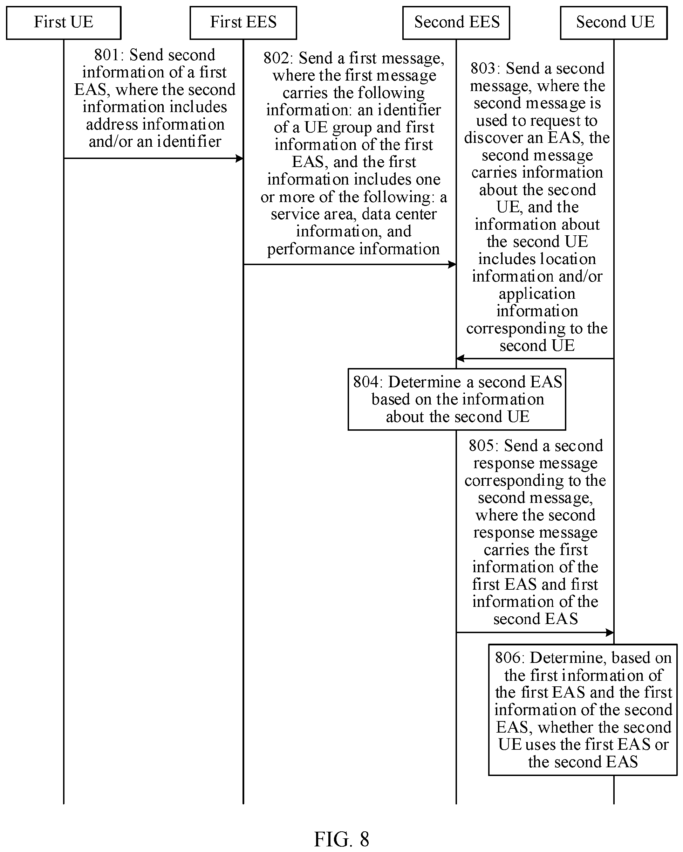

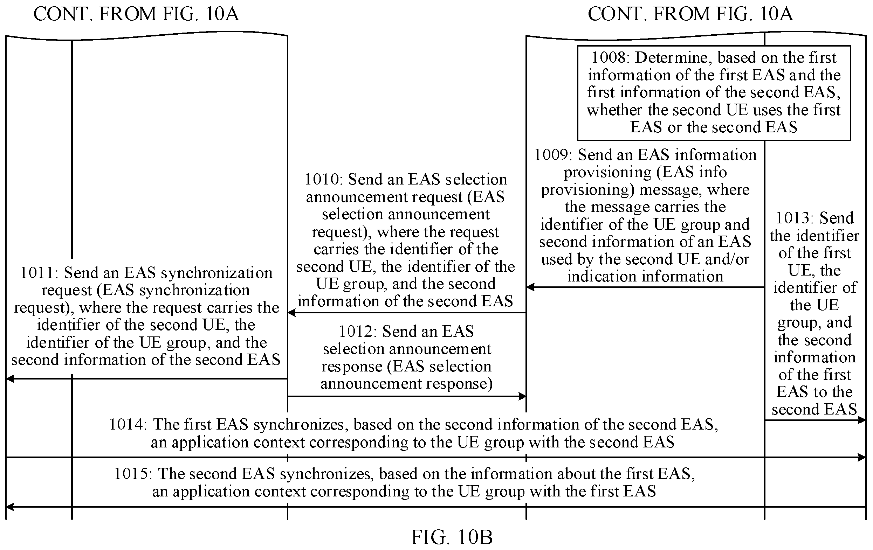

In this embodiment of this application, the first EES is an EES connected to the first UE, and the second EES is an EES connected to the second UE. In other words, the first EES is an EES to which the first UE sends the EAS discovery request message or the EAS information provisioning request, and the second EES is an EES to which the second UE sends an EAS discovery request message or an EAS information provisioning request. The first EES may send the first information of the first EAS to the second EES. In this way, after receiving the first information of the first EAS, the second EES may determine, based on the first information of the first EAS, whether the second UE uses the first EAS. There are the following two specific implementations in which the second EES determines, based on the first information of the first EAS, whether the second UE uses the first EAS. In a first specific implementation, the second EES determines, based on the first information of the first EAS, whether the second UE uses the first EAS. For example, for details, refer to method embodiments corresponding to FIG. 5 to FIG. 7A and FIG. 7B. In a second specific implementation, the second EES sends the first information of the first EAS to the second UE, and the second UE determines, based on the first information of the first EAS, whether the second UE uses the first EAS. For example, for details, refer to method embodiments corresponding to FIG. 8 to FIG. 10A and FIG. 10B.

In this embodiment of this application, the first EES may determine the first information of the first EAS based on the second information of the first EAS, and then send the first message to the second EES. The first information of the first EAS includes one or more of the following: the service area (service area) corresponding to the first EAS, the data center information corresponding to the first EAS, and the performance information corresponding to the first EAS.

In a possible embodiment, the service area corresponding to the first EAS is a service area in which the first EAS can provide a service. In the service area, a UE may obtain a service of the first EAS, connect to the first EAS, or obtain a service of a KPI provided by the first EAS. The service area may be a geographical service area, or a network topological service area.

In a possible embodiment, the data center information corresponding to the first EAS may be a DNAI of an EDN in which the first EAS is located and/or the EDN in which the first EAS is located, or may be a data center (data center).

In a possible embodiment, the performance information corresponding to the first EAS may be KPI information of the first EAS, and/or response time information corresponding to the first EAS in the service area corresponding to the first EAS, and/or a delay between the UE and the first EAS, and/or response time information between the first EAS and the AC. The response time information corresponding to the first EAS in the service area corresponding to the first EAS may indicate response time of data transmission performed when the UE connects to the first EAS in the service area corresponding to the first EAS, that is, duration from sending of a data packet to reception of the data packet. A delay between a UE and an EAS may include an uplink delay, that is, a delay from the UE to the EAS. An end-to-end delay may include a downlink delay, that is, a delay from the EAS to the UE. The KPI information of the first EAS may include one or more information elements in the following Table 3.

**Table 3**

| Information element | Status | Description |
|---|---|---|
| Maximum request rate (Maximum Request rate) | O | Maximum request rate that is from an AC and that is supported by a server |
| Maximum response time (Maximum Response time) | O | Maximum response time for an AC's service request |
| Availability (Availability) | O | Percentage of time the server is available for the AC's use |
| Available compute (Available Compute) | O | Maximum compute resource available for the AC |
| Available graphical compute (Available Graphical Compute) | O | Maximum graphical compute resource available for the AC |
| Available memory (Available Memory) | O | Maximum memory resource available for the AC |
| Available storage (Available Storage) | O | Maximum storage resource available for the AC |
| Connection bandwidth (Connection Bandwidth) | O | Connection bandwidth (K bit/s) for the AC |

In a possible embodiment, the first EES may use the first EAS as a common EAS. Therefore, the first EAS in step 402 may also be referred to as a common EAS.

It can be learned that, according to the method described in FIG. 4, the first EES may send, to the second EES, the service area and/or the data center information and/or the performance information corresponding to the first EAS used by the first UE, so that the second EES can determine, based on the service area and/or the data center information and/or the performance information corresponding to the first EAS used by the first UE, whether the second UE in the same UE group as the first UE uses the first EAS, instead of directly determining the first EAS used by the first UE as an EAS used by the second UE. This helps the second UE connect to a better EAS to obtain an application service, so as to obtain a better application service.

FIG. 5 is a schematic flowchart of a communication method for edge computing according to an embodiment of this application.

501: A first UE sends second information of a first EAS to a first EES, where the second information includes address information and/or an identifier. The first EAS is an EAS used by the first UE. Correspondingly, the first EES may receive the second information of the first EAS.

502: The first EES sends a first message to a second EES, where the first message carries the following information: an identifier of a UE group and first information of the first EAS, and the first information includes one or more of the following: a service area, data center information, and performance information. The UE group includes the first UE and a second UE. Correspondingly, the second EES may receive the first message.

For specific descriptions of step 501 and step 502, refer to the descriptions of step 401 and step 402. Details are not described herein.

503: The second UE sends a second message to the second EES, where the second message is used to request to discover an EAS, the second message carries information about the second UE, and the information about the second UE includes location information and/or application information corresponding to the second UE. Correspondingly, the second EES may receive the second message.

In a possible embodiment, the second message may be an EAS discovery request.

In a possible embodiment, the application information corresponding to the second UE may be an AC profile or an EAS discovery requirement. For example, the AC profile may include one or more information elements in the foregoing Table 1. For example, the EAS discovery requirement may include one or more information elements in the foregoing Table 2.

504: The second EES determines, based on the information about the second UE and the first information of the first EAS, whether the second UE uses the first EAS.

In a possible embodiment, a specific implementation in which the second EES determines, based on the information about the second UE and the first information of the first EAS, whether the second UE uses the first EAS is as follows: The second EES determines a second EAS based on the information about the second UE. The second EES determines, based on first information of the second EAS and the first information of the first EAS, whether the second UE uses the first EAS or the second EAS.

The first information of the second EAS includes one or more of the following: a service area (service area) corresponding to the second EAS, data center information corresponding to the second EAS, and performance information corresponding to the second EAS. For descriptions of the service area corresponding to the EAS, the data center information corresponding to the EAS, and the performance information corresponding to the EAS, refer to the descriptions in the embodiment corresponding to FIG. 4. Details are not described herein.

In this embodiment of this application, the second EES may determine, based on the first information of the second EAS and the first information of the first EAS, whether performance in a case in which the second UE uses the first EAS is better or performance in a case in which the second UE uses the second EAS is better. If the performance in the case in which the second UE uses the first EAS is better, the second EES determines that the second UE uses the first EAS. If the performance in the case in which the second UE uses the second EAS is better, the second EES determines that the second UE uses the second EAS. Better performance means that for an interaction delay between EASs, interaction complexity, and delay/connection performance between a UE and a corresponding EAS in a case in which a group of UEs connects to a plurality of EASs and delay/connection performance between each UE and an EAS in a case in which a group of UEs connects to the same EAS, performance in a case in which the group of UEs connects to the plurality of EASs is better or performance in a case in which the group of UEs connects to the same EAS is better.

For example, the second EES may determine, based on the service area corresponding to the second EAS, the service area corresponding to the first EAS, and the location information of the second UE, whether the second UE uses the first EAS or the second EAS.

For another example, the second EES may determine, based on DNAI information corresponding to the second EAS, DNAI information corresponding to the first EAS, and the location information of the second UE, whether the second UE uses the first EAS or the second EAS.

For another example, the second EES may determine, based on KPI information of the second EAS and KPI information of the first EAS, whether the second UE uses the first EAS or the second EAS.

For another example, the second EES may determine, based on response time information corresponding to the second EAS in the service area corresponding to the second EAS and response time information corresponding to the first EAS in the service area corresponding to the first EAS, whether the second UE uses the first EAS or the second EAS.

For another example, the second EES may determine, response time information corresponding to the second EAS in the service area corresponding to the second EAS, response time information corresponding to the first EAS in the service area corresponding to the first EAS, and connection information between the first EES and the second EES, whether the second UE uses the first EAS or the second EAS. Optionally, the connection information between the first EES and the second EES may be a transmission delay between the first EES and the second EES.

In a possible embodiment, that the second EES determines, based on the first information of the first EAS and the first information of the second EAS, whether the second UE uses the first EAS or the second EAS includes: The second EES may determine, based on the first information of the second EAS, the first information of the first EAS, and delay information or response time information between a data center corresponding to the first EAS/first EES and a data center corresponding to the second EAS/second EES, or delay information or response time information between the first EAS/first EES and the second EAS/second EES, whether the second UE uses the first EAS or the second EAS.

Optionally, the delay information or the response time information between the data center corresponding to the first EAS/first EES and the data center corresponding to the second EAS/second EES may be preconfigured in the second EES and/or the first EES. Optionally, the delay information or the response time information between the first EAS/first EES and the second EAS/second EES may be preconfigured in the second EES and/or the first EES.

It can be learned that, according to the method described in FIG. 5, the second EES may determine, based on the service area and/or the data center information and/or the performance information corresponding to the first EAS used by the first UE, whether the second UE in the same UE group as the first UE uses the first EAS, instead of directly determining the first EAS used by the first UE as an EAS used by the second UE. This helps the second UE connect to a better EAS to obtain an application service, so as to obtain a better application service.

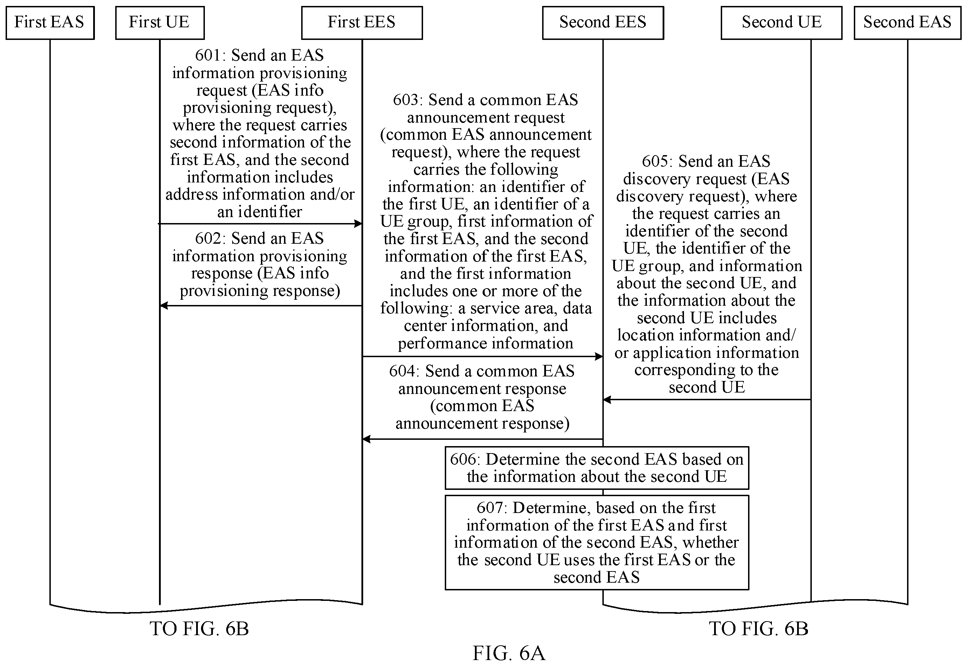

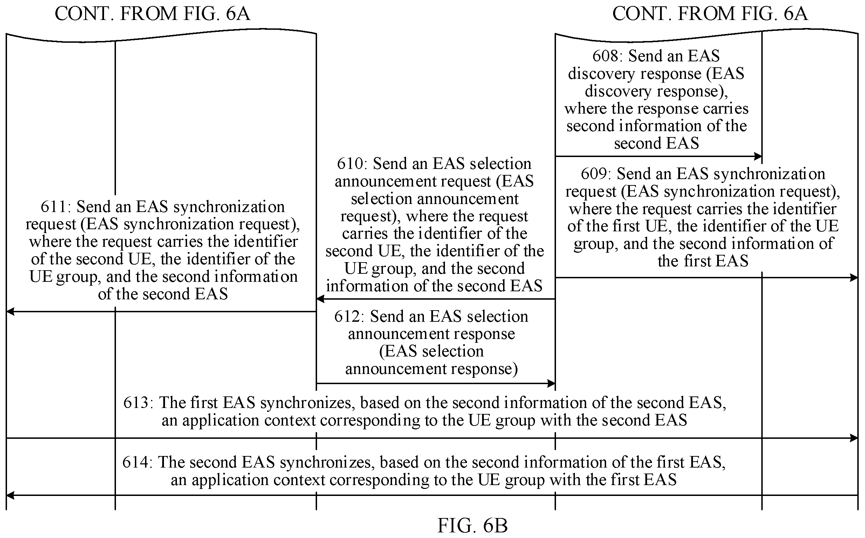

FIG. 6A and FIG. 6B are a schematic flowchart of a communication method for edge computing according to an embodiment of this application. A message name in the method procedure shown in FIG. 6A and FIG. 6B is merely a specific example. Information whose transmission is performed in the method procedure shown in FIG. 6A and FIG. 6B may alternatively be carried in another message for transmission. This is not limited in this embodiment of this application.

601: A first UE sends an EAS information provisioning request to a first EES, where the EAS information provisioning request carries second information of a first EAS, and the second information includes address information and/or an identifier. The first EAS is an EAS used by the first UE. Correspondingly, the first EES may receive the EAS information provisioning request.

602: The first EES sends an EAS information provisioning response (EAS info provisioning response) to the first UE.

Step 601 and step 602 are optional. For example, the first UE sends an EAS discovery request message to the first EES. If the first EES determines, based on information about the first UE after receiving the EAS discovery request, that there is only one EAS that meets a requirement of the first UE, the EAS is the first EAS. The first EES sends an EAS discovery response to the first UE, where the EAS discovery response carries the address and/or the identifier of the first EAS; and the first EES performs step 603. In this case, step 601 and step 602 do not need to be performed.

603: The first EES sends a common EAS announcement request to a second EES, where the common EAS announcement request carries the following information: an identifier of the first UE, an identifier of a UE group, first information of the first EAS, and the second information of the first EAS, and the first information includes one or more of the following: a service area, data center information, and performance information. The UE group includes the first UE and a second UE. Correspondingly, the second EES may receive the common EAS announcement request.

604: The second EES sends a common EAS announcement response (common EAS announcement response) to the first EES.

605: The second UE sends an EAS discovery request to the second EES, where the EAS discovery request is used to request to discover an EAS, the EAS discovery request carries an identifier of the second UE, the identifier of the UE group, and information about the second UE, and the information about the second UE includes location information and/or application information corresponding to the second UE. Correspondingly, the second EES may receive the EAS discovery request.

606: The second EES determines a second EAS based on the information about the second UE.

Optionally, the second EES specifically determines the second EAS based on the information about the second UE and information about an EAS managed by the second EES.

Optionally, the EAS may send a registration request message to the EES, where the registration request message carries EAS information. Alternatively, the second EES may obtain EAS information through a network management system, or the second EES may obtain EAS information through preconfiguration.

Optionally, the EAS information may include one or more information elements in the following Table 4.

**Table 4**

| Information element | Status | Description |
|---|---|---|
| EAS identifier (EASID) | M | Identifier of an EAS |
| EAS endpoint information (EAS Endpoint) | M | Endpoint information (for example, a URI, an FQDN, and an IP address) used for communication with the EAS, where the information may be discovered by an EEC and exposed to an AC so that the AC can establish contact with the EAS |
| AC identifier (ACID) | O | Identifies an AC that can be served by the EAS |
| EAS provider identifier (EAS Provider Identifier) | O | Identifier of an ASP that provides the EAS |
| Allowed MNO information (Allowed MNO information) | O | Information about an allowed operator (for example, a MNO name and a PLMN ID) from which a subscriber can consume an EAS service |
| EAS type (EAS Type) | O | Category or type (for example, V2X) of the EAS |
| EAS description (EAS description) | O | Human-readable description of the EAS |
| EAS geographical service area (EAS Geographical Service Area) | O | Geographical service area that the EAS serves, where an AC in a UE located outside the area shall not be served |
| EAS topological service area (EAS Topological Service Area) | O | The EAS serves a UE that connects to a core network from one of cells included in this service area An AC in a UE located outside the area shall not be served. See possible formats in Table 8.2.7-1 |
| EAS service KPIs (EAS Service KPIs) | O | Service characteristics provided by the EAS, detailed in Table 8.2.5-1 |
| List of EAS DNAI(s) (List of EAS DNAI(s)) | O | DNAI(s) associated with the EAS. This IE is used as a potential location of an application in clause 5.6.7 of 3GPP TS 23.501 [2]. |
| | | The list of EAS DNAI(s) is a subset of DNAIs related to an EDN in which the EAS is located |

607: The second EES determines, based on the first information of the first EAS and first information of the second EAS, whether the second UE uses the first EAS or the second EAS.

For specific implementations of step 601 and step 603, refer to the related descriptions of step 401 and step 402 in FIG. 4. Details are not described herein. For specific implementations of step 605 to step 607, refer to the related descriptions of step 503 and step 504 in FIG. 5. Details are not described herein.

608: The second EES sends an EAS discovery response to the second UE. Correspondingly, the second UE may receive the EAS discovery response.

If it is determined that the second UE uses the first EAS, the EAS discovery response carries the second information of the first EAS.

If it is determined that the second UE uses the second EAS, the EAS discovery response carries second information of the second EAS, where the second information of the second EAS includes an identifier of the second EAS and/or address information of the second EAS. In FIG. 6A and FIG. 6B, an example in which the second UE uses the second EAS is used.

In this embodiment of this application, if the EAS discovery response carries the second information of the first EAS, after receiving the EAS discovery response, the second UE may communicate with the first EAS based on the second information of the first EAS.

If the EAS discovery response carries the second information of the second EAS, after receiving the EAS discovery response, the second UE may communicate with the second EAS based on the second information of the second EAS.

609: If determining that the second UE uses the second EAS, the second EES sends an EAS synchronization request (EAS synchronization request) to the second EAS, where the EAS synchronization request carries the identifier of the first UE, the identifier of the UE group, and the second information of the first EAS. Correspondingly, the second EAS may receive the EAS synchronization request.

In this embodiment of this application, after receiving the EAS synchronization request, the second EAS may perform step 614.

610: If determining that the second UE uses the second EAS, the second EES sends an EAS selection announcement request (EAS selection announcement request) to the first EES, where the EAS selection announcement request carries the identifier of the second UE, the identifier of the UE group, and the second information of the second EAS. Correspondingly, the first EES may receive the EAS selection announcement request.

611: The first EES sends an EAS synchronization request to the first EAS, where the EAS synchronization request carries the identifier of the second UE, the identifier of the UE group, and the second information of the second EAS. Correspondingly, the first EAS may receive the EAS synchronization request.

In this embodiment of this application, after receiving the EAS synchronization request, the first EAS may perform step 613.

612: The first EES sends an EAS selection announcement response (EAS selection announcement response) to the second EES.

613: The first EAS synchronizes, based on the second information of the second EAS, an application context corresponding to the UE group with the second EAS.

614: The second EAS synchronizes, based on the second information of the first EAS, an application context corresponding to the UE group with the first EAS.

In a possible embodiment, the identifier of the first UE and/or the identifier of the UE group that are/is carried in the common EAS announcement request in step 603, and the identifier of the first UE and/or the identifier of the UE group that are/is carried in the EAS synchronization request in step 609 are optional.

In a possible embodiment, the identifier of the second UE and/or the identifier of the UE group that are/is carried in the EAS discovery request in step 605, the identifier of the second UE and/or the identifier of the UE group that are/is carried in the EAS selection announcement request in step 610, and the identifier of the second UE and/or the identifier of the UE group that are/is carried in the EAS synchronization request in step 611 are optional.

It can be learned that, according to the method described in FIG. 6A and FIG. 6B, the second EES may determine, based on the service area and/or the data center information and/or the performance information corresponding to the first EAS used by the first UE, whether the second UE in the same UE group as the first UE uses the first EAS, instead of directly determining the first EAS used by the first UE as an EAS used by the second UE. This helps the second UE connect to a better EAS to obtain an application service, so as to obtain a better application service. In addition, if the second UE does not use the first EAS, application context synchronization may be performed between the second EAS and the first EAS, to ensure data consistency between different UEs in a same UE group, so that a service of a UE in the UE group can be normally performed.

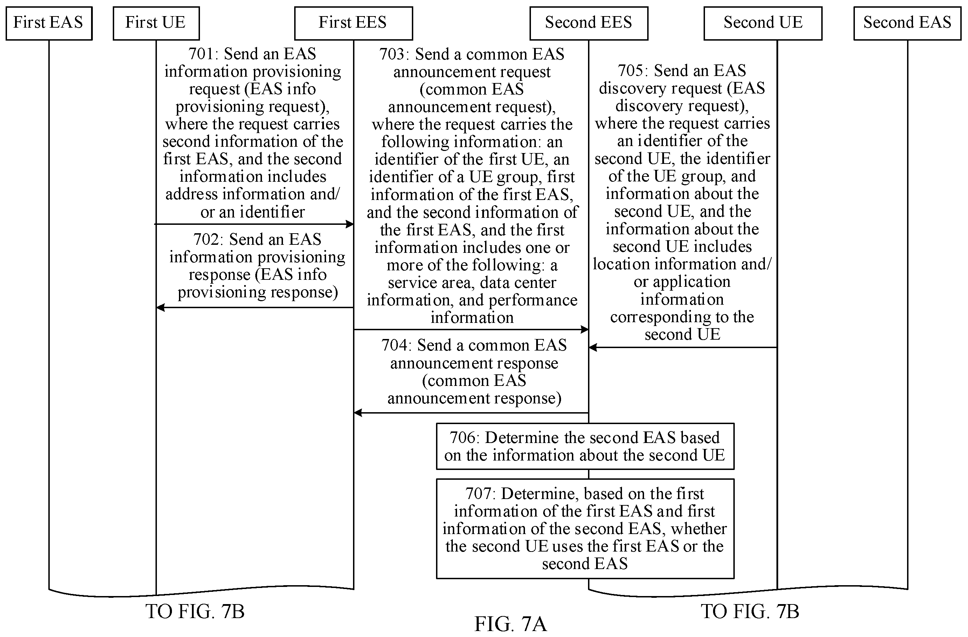

FIG. 7A and FIG. 7B are a schematic flowchart of a communication method for edge computing according to an embodiment of this application. A message name in the method procedure shown in FIG. 7A and FIG. 7B is merely a specific example. Information whose transmission is performed in the method procedure shown in FIG. 7A and FIG. 7B may alternatively be carried in another message for transmission. This is not limited in this embodiment of this application.

701: A first UE sends an EAS information provisioning request to a first EES, where the EAS information provisioning request carries second information of a first EAS, and the second information includes address information and/or an identifier. The first EAS is an EAS used by the first UE. Correspondingly, the first EES may receive the EAS information provisioning request.

702: The first EES sends an EAS information provisioning response to the first UE.

703: The first EES sends a common EAS announcement request to a second EES, where the common EAS announcement request carries the following information: an identifier of the first UE, an identifier of a UE group, first information of the first EAS, and the second information of the first EAS, and the first information includes one or more of the following: a service area, data center information, and performance information. The UE group includes the first UE and a second UE. Correspondingly, the second EES may receive the common EAS announcement request.

704: The second EES sends a common EAS announcement response to the first EES.

705: The second UE sends an EAS discovery request to the second EES, where the EAS discovery request is used to request to discover an EAS, the EAS discovery request carries an identifier of the second UE, the identifier of the UE group, and information about the second UE, and the information about the second UE includes location information and/or application information corresponding to the second UE. Correspondingly, the second EES may receive the EAS discovery request.

706: The second EES determines a second EAS based on the information about the second UE.

707: The second EES determines, based on the first information of the first EAS and first information of the second EAS, whether the second UE uses the first EAS or the second EAS.

For specific implementations of step 701 to step 707, refer to the specific implementations of step 601 to step 607. Details are not described herein.

708: The second EES sends an EAS discovery response to the second UE. Correspondingly, the second UE may receive the EAS discovery response.

If it is determined that the second UE uses the first EAS, the EAS discovery response carries the second information of the first EAS.

If it is determined that the second UE uses the second EAS, the EAS discovery response carries the identifier of the first UE, the identifier of the UE group, second information of the second EAS, and the second information of the first EAS, where the second information of the second EAS includes an identifier of the second EAS and/or address information of the second EAS. In FIG. 7A and FIG. 7B, an example in which the second UE uses the second EAS is used.

In this embodiment of this application, if the EAS discovery response carries the second information of the first EAS, after receiving the EAS discovery response, the second UE may communicate with the first EAS based on the second information of the first EAS.

If the EAS discovery response carries the second information of the second EAS and the second information of the first EAS, after receiving the EAS discovery response, the second UE may communicate with the second EAS based on the second information of the second EAS. The second information of the first EAS is sent by the second UE to the second EAS, so that the second EAS performs application context synchronization with the first EAS based on the second information of the first EAS.

In a possible embodiment, if it is determined that the second UE uses the second EAS, the second response message further carries indication information, where the indication information indicates that the second EAS needs to perform application context synchronization with the first EAS.

709: The second UE sends the identifier of the first UE, the identifier of the UE group, and the second information of the first EAS to the second EAS. Correspondingly, the second EAS may receive the identifier of the first UE, the identifier of the UE group, and the second information of the first EAS.

Specifically, the EAS discovery response may be received by an EEC in the second UE. The EEC in the second UE sends the EAS discovery response to an AC in the second UE, and the AC in the second UE sends the identifier of the first UE, the identifier of the UE group, and the second information of the first EAS to the second EAS. In other words, in this embodiment of this application, an application layer of the second UE may notify the second EAS to perform application context synchronization with the first EAS.

In this embodiment of this application, after receiving the identifier of the first UE, the identifier of the UE group, and the second information of the first EAS, the second EAS may perform step 714.

710: If determining that the second UE uses the second EAS, the second EES sends an EAS selection announcement request to the first EES, where the EAS selection announcement request carries the identifier of the second UE, the identifier of the UE group, and the second information of the second EAS. Correspondingly, the first EES may receive the EAS selection announcement request.

711: The first EES sends an EAS synchronization request to the first EAS, where the EAS synchronization request carries the identifier of the second UE, the identifier of the UE group, and the second information of the second EAS. Correspondingly, the first EAS may receive the EAS synchronization request.

In this embodiment of this application, after receiving the EAS synchronization request, the first EAS may perform step 713.

712: The first EES sends an EAS selection announcement response to the second EES.

713: The first EAS synchronizes, based on the second information of the second EAS, an application context corresponding to the UE group with the second EAS.

714: The second EAS synchronizes, based on the information about the first EAS, an application context corresponding to the UE group with the first EAS.

In a possible embodiment, the identifier of the first UE and/or the identifier of the UE group that are/is carried in the common EAS announcement request in step 703, and the identifier of the first UE and/or the identifier of the UE group that are/is carried in the EAS discovery response in step 708 are optional. The identifier of the first UE and/or the identifier of the UE group in step 709 are/is optional.

In a possible embodiment, the identifier of the second UE and/or the identifier of the UE group that are/is carried in the EAS discovery request in step 705, the identifier of the second UE and/or the identifier of the UE group that are/is carried in the EAS selection announcement request in step 710, and the identifier of the second UE and/or the identifier of the UE group that are/is carried in the EAS synchronization request in step 711 are optional.

It can be learned that, according to the method described in FIG. 7A and FIG. 7B, the second EES may determine, based on the service area and/or the data center information and/or the performance information corresponding to the first EAS used by the first UE, whether the second UE in the same UE group as the first UE uses the first EAS, instead of directly determining the first EAS used by the first UE as an EAS used by the second UE. This helps the second UE connect to a better EAS to obtain an application service, so as to obtain a better application service. In addition, if the second UE does not use the first EAS, application context synchronization may be performed between the second EAS and the first EAS, to ensure data consistency between different UEs in a same UE group, so that a service of a UE in the UE group can be normally performed.

FIG. 8 is a schematic flowchart of a communication method for edge computing according to an embodiment of this application.

801: A first UE sends second information of a first EAS to a first EES, where the second information includes address information and/or an identifier. The first EAS is an EAS used by the first UE. Correspondingly, the first EES may receive the second information of the first EAS.

802: The first EES sends a first message to a second EES, where the first message carries the following information: an identifier of a UE group and first information of the first EAS, and the first information includes one or more of the following: a service area, data center information, and performance information. The UE group includes the first UE and a second UE. Correspondingly, the second EES may receive the first message.

803: The second UE sends a second message to the second EES, where the second message is used to request to discover an EAS, the second message carries information about the second UE, and the information about the second UE includes location information and/or application information corresponding to the second UE. Correspondingly, the second EES may receive the second message.

804: The second EES determines a second EAS based on the information about the second UE.

For specific implementations of step 801 to step 804, refer to the descriptions corresponding to step 501 to step 504. Details are not described herein.

805: The second EES sends a second response message corresponding to the second message to the second UE, where the second response message carries the first information of the first EAS and first information of the second EAS. Correspondingly, the second UE may receive the second response message.

Optionally, the second response message may further carry delay information or response time information between a data center corresponding to the first EAS/first EES and a data center corresponding to the second EAS/second EES, or delay information or response time information between the first EAS/first EES and the second EAS/second EES. Correspondingly, the second UE may determine, based on the first information of the first EAS, the first information of the second EAS, and the delay information or the response time information between the data center corresponding to the first EAS/first EES and the data center corresponding to the second EAS/second EES, or the delay information or the response time information between the first EAS/first EES and the second EAS/second EES, whether to use the first EAS or the second EAS.

Optionally, the delay information or the response time information between the data center corresponding to the first EAS/first EES and the data center corresponding to the second EAS/second EES may be preconfigured in the second EES and/or the first EES. Optionally, the delay information or the response time information between the first EAS/first EES and the second EAS/second EES may be preconfigured in the second EES and/or the first EES.

806: The second UE determines, based on the first information of the first EAS and the first information of the second EAS, whether the second UE uses the first EAS or the second EAS.

The first information of the second EAS includes one or more of the following: a service area (service area) corresponding to the second EAS, data center information corresponding to the second EAS, and performance information corresponding to the second EAS. For descriptions of the service area corresponding to the second EAS, the data center information corresponding to the EAS, and the performance information corresponding to the EAS, refer to the descriptions in the embodiment corresponding to FIG. 4. Details are not described herein.

A specific implementation in which the second UE determines, based on the first information of the first EAS and the first information of the second EAS, whether the second UE uses the first EAS or the second EAS is the same as the specific implementation in which the second EES determines, based on the first information of the first EAS and the first information of the second EAS, whether the second UE uses the first EAS or the second EAS described in the embodiment corresponding to FIG. 5. Details are not described herein.

It can be learned that, according to the method described in FIG. 8, the second UE may determine, based on the service area and/or the data center information and/or the performance information corresponding to the first EAS used by the first UE, whether the second UE uses the first EAS, instead of directly determining the first EAS used by the first UE as an EAS used by the second UE. This helps the second UE connect to a better EAS to obtain an application service, so as to obtain a better application service.

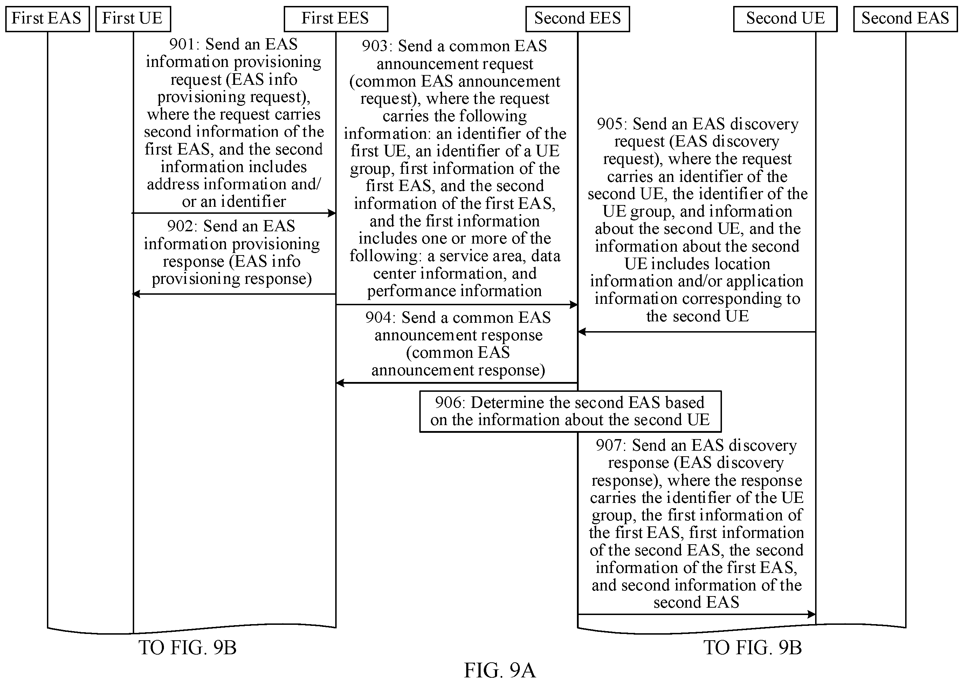

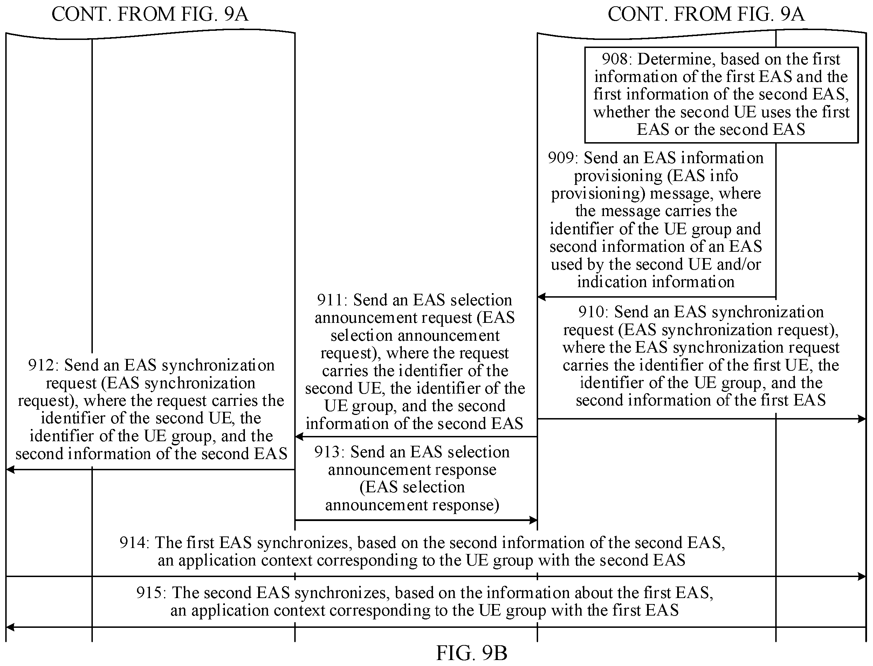

FIG. 9A and FIG. 9B are a schematic flowchart of a communication method for edge computing according to an embodiment of this application. A message name in the method procedure shown in FIG. 9A and FIG. 9B is merely a specific example. Information whose transmission is performed in the method procedure shown in FIG. 9A and FIG. 9B may alternatively be carried in another message for transmission. This is not limited in this embodiment of this application.

901: A first UE sends an EAS information provisioning request to a first EES, where the EAS information provisioning request carries second information of a first EAS, and the second information includes address information and/or an identifier. The first EAS is an EAS used by the first UE. Correspondingly, the first EES may receive the EAS information provisioning request.

902: The first EES sends an EAS information provisioning response to the first UE.

903: The first EES sends a common EAS announcement request to a second EES, where the common EAS announcement request carries the following information: an identifier of the first UE, an identifier of a UE group, first information of the first EAS, and the second information of the first EAS, and the first information includes one or more of the following: a service area, data center information, and performance information. The UE group includes the first UE and a second UE. Correspondingly, the second EES may receive the common EAS announcement request.

904: The second EES sends a common EAS announcement response to the first EES.

905: The second UE sends an EAS discovery request to the second EES, where the EAS discovery request is used to request to discover an EAS, the EAS discovery request carries an identifier of the second UE, the identifier of the UE group, and information about the second UE, and the information about the second UE includes location information and/or application information corresponding to the second UE. Correspondingly, the second EES may receive the EAS discovery request.

906: The second EES determines a second EAS based on the information about the second UE.

For specific implementations of step 901 to step 906, refer to the specific implementations of step 601 to step 607. Details are not described herein.

907: The second EES sends an EAS discovery response to the second UE, where the EAS discovery response carries the identifier of the UE group, the first information of the first EAS, first information of the second EAS, the second information of the first EAS, and second information of the second EAS. The second information of the second EAS includes an identifier of the second EAS and/or address information of the second EAS. Correspondingly, the second UE may receive the EAS discovery response.

Optionally, the EAS discovery response may further carry delay information or response time information between a data center corresponding to the first EAS/first EES and a data center corresponding to the second EAS/second EES, or delay information or response time information between the first EAS/first EES and the second EAS/second EES. Correspondingly, the second UE may determine, based on the first information of the first EAS, the first information of the second EAS, and the delay information or the response time information between the data center corresponding to the first EAS/first EES and the data center corresponding to the second EAS/second EES, or the delay information or the response time information between the first EAS/first EES and the second EAS/second EES, whether to use the first EAS or the second EAS.

Optionally, the delay information or the response time information between the data center corresponding to the first EAS/first EES and the data center corresponding to the second EAS/second EES may be preconfigured in the second EES and/or the first EES. Optionally, the delay information or the response time information between the first EAS/first EES and the second EAS/second EES may be preconfigured in the second EES and/or the first EES.

908: The second UE determines, based on the first information of the first EAS and the first information of the second EAS, whether the second UE uses the first EAS or the second EAS.

For specific implementations of step 907 and step 908, refer to the specific implementations of step 805 and step 806. Details are not described herein.

In this embodiment of this application, if determining that the second UE uses the first EAS, the second UE communicates with the first EAS based on the second information of the first EAS; or if determining that the second UE uses the second EAS, the second UE communicates with the second EAS based on the second information of the second EAS.

909: The second UE sends an EAS information provisioning message to the second EES, where the message carries the identifier of the UE group, and second information of an EAS used by the second UE and/or indication information, and the indication information indicates whether the second UE uses the first EAS or indicates whether application context synchronization needs to be performed. Correspondingly, the second EES may receive the EAS information provisioning message.

910: If the second EES determines, based on the information about the EAS selected by the second UE and/or the indication information, that context synchronization needs to be performed between the first EAS and the second EAS, the second EES sends an EAS synchronization request to the second EAS, where the EAS synchronization request carries the identifier of the first UE, the identifier of the UE group, and the second information of the first EAS. Correspondingly, the second EAS may receive the EAS synchronization request.

After receiving the EAS synchronization request, the second EAS may perform step 915.

911: If the second EES determines, based on the information about the EAS used by the second UE and/or the indication information, that context synchronization needs to be performed between the first EAS and the second EAS, the second EES sends an EAS selection announcement request to the first EES, where the EAS selection announcement request carries the identifier of the second UE, the identifier of the UE group, and the second information of the second EAS. Correspondingly, the first EES may receive the EAS selection announcement request.

912: The first EES sends an EAS synchronization request to the first EAS, where the EAS synchronization request carries the identifier of the second UE, the identifier of the UE group, and the second information of the second EAS. Correspondingly, the first EAS may receive the EAS synchronization request.

After receiving the EAS synchronization request, the first EAS may perform step 914.

913: The first EES sends an EAS selection announcement response to the second EES.

914: The first EAS synchronizes, based on the second information of the second EAS, an application context corresponding to the UE group with the second EAS.

915: The second EAS synchronizes, based on the information about the first EAS, an application context corresponding to the UE group with the first EAS.

In a possible embodiment, the identifier of the first UE and/or the identifier of the UE group that are/is carried in the common EAS announcement request in step 903, and the identifier of the first UE and/or the identifier of the UE group that are/is carried in the EAS synchronization request in step 910 are optional. The identifier of the UE group carried in the EAS discovery response in step 907 is optional.

In a possible embodiment, the identifier of the second UE and/or the identifier of the UE group that are/is carried in the EAS discovery request in step 905, the identifier of the second UE and/or the identifier of the UE group that are/is carried in the EAS selection announcement request in step 911, and the identifier of the second UE and/or the identifier of the UE group that are/is carried in the EAS synchronization request in step 912 are optional.

It can be learned that, according to the method described in FIG. 9A and FIG. 9B, the second UE may determine, based on the service area and/or the data center information and/or the performance information corresponding to the first EAS used by the first UE, whether the second UE uses the first EAS, instead of directly determining the first EAS used by the first UE as an EAS used by the second UE. This helps the second UE connect to a better EAS to obtain an application service, so as to obtain a better application service. In addition, if the second UE does not use the first EAS, application context synchronization may be performed between the second EAS and the first EAS, to ensure data consistency between different UEs in a same UE group, so that a service of a UE in the UE group can be normally performed.

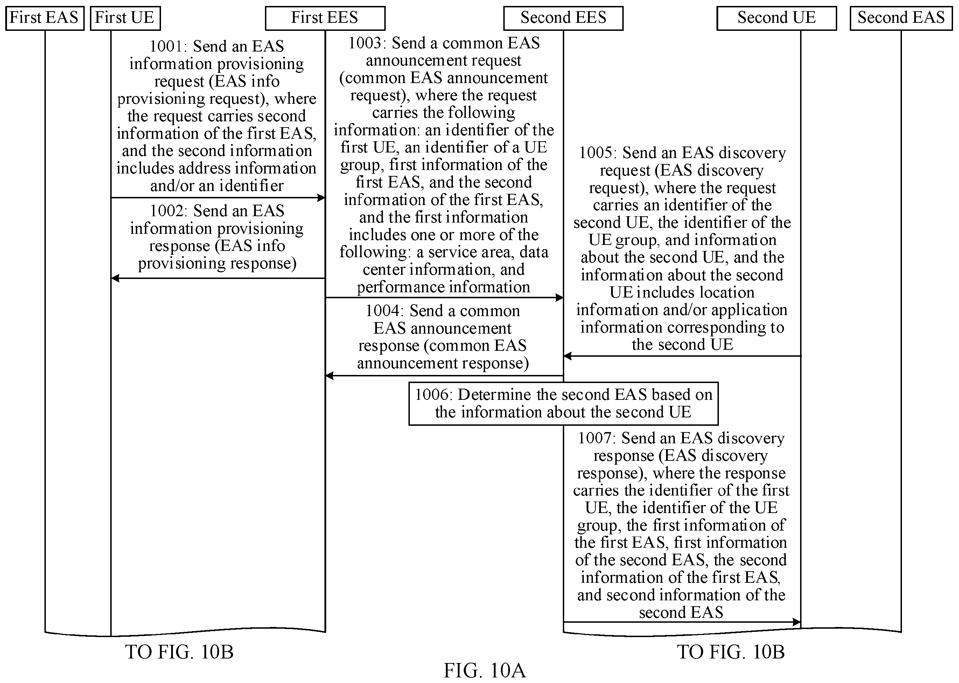

FIG. 10A and FIG. 10B are a schematic flowchart of a communication method for edge computing according to an embodiment of this application. A message name in the method procedure shown in FIG. 10A and FIG. 10B is merely a specific example. Information whose transmission is performed in the method procedure shown in FIG. 10A and FIG. 10B may alternatively be carried in another message for transmission. This is not limited in this embodiment of this application.

1001: A first UE sends an EAS information provisioning request to a first EES, where the EAS information provisioning request carries second information of a first EAS, and the second information includes address information and/or an identifier. The first EAS is an EAS used by the first UE. Correspondingly, the first EES may receive the EAS information provisioning request.

1002: The first EES sends an EAS information provisioning response to the first UE.

1003: The first EES sends a common EAS announcement request to a second EES, where the common EAS announcement request carries the following information: an identifier of the first UE, an identifier of a UE group, first information of the first EAS, and the second information of the first EAS, and the first information includes one or more of the following: a service area, data center information, and performance information. The UE group includes the first UE and a second UE. Correspondingly, the second EES may receive the common EAS announcement request.

1004: The second EES sends a common EAS announcement response to the first EES.

1005: The second UE sends an EAS discovery request to the second EES, where the EAS discovery request is used to request to discover an EAS, the EAS discovery request carries an identifier of the second UE, the identifier of the UE group, and information about the second UE, and the information about the second UE includes location information and/or application information corresponding to the second UE. Correspondingly, the second EES may receive the EAS discovery request.

1006: The second EES determines a second EAS based on the information about the second UE.

For specific implementations of step 901 to step 906, refer to the specific implementations of step 601 to step 607. Details are not described herein.

1007: The second EES sends an EAS discovery response to the second UE, where the EAS discovery response carries the identifier of the UE group, the first information of the first EAS, first information of the second EAS, the second information of the first EAS, and second information of the second EAS. The second information of the second EAS includes an identifier of the second EAS and/or address information of the second EAS. Correspondingly, the second UE may receive the EAS discovery response.

Optionally, the EAS discovery response may further carry delay information or response time information between a data center corresponding to the first EAS/first EES and a data center corresponding to the second EAS/second EES, or delay information or response time information between the first EAS/first EES and the second EAS/second EES. Correspondingly, the second UE may determine, based on the first information of the first EAS, the first information of the second EAS, and the delay information or the response time information between the data center corresponding to the first EAS/first EES and the data center corresponding to the second EAS/second EES, or the delay information or the response time information between the first EAS/first EES and the second EAS/second EES, whether to use the first EAS or the second EAS.

Optionally, the delay information or the response time information between the data center corresponding to the first EAS/first EES and the data center corresponding to the second EAS/second EES may be preconfigured in the second EES and/or the first EES. Optionally, the delay information or the response time information between the first EAS/first EES and the second EAS/second EES may be preconfigured in the second EES and/or the first EES.

1008: The second UE determines, based on the first information of the first EAS and the first information of the second EAS, whether the second UE uses the first EAS or the second EAS.

For specific implementations of step 1007 and step 1008, refer to the specific implementations of step 805 and step 806. Details are not described herein.

In this embodiment of this application, if determining that the second UE uses the first EAS, the second UE communicates with the first EAS based on the second information of the first EAS; or if determining that the second UE uses the second EAS, the second UE communicates with the second EAS based on the second information of the second EAS.

1009: The second UE sends an EAS information provisioning message to the second EES, where the message carries the identifier of the UE group, and second information of an EAS used by the second UE and/or indication information, and the indication information indicates whether the second UE uses the first EAS or indicates whether application context synchronization needs to be performed. Correspondingly, the second EES may receive the EAS information provisioning message.

1010: If the second EES determines, based on the information about the EAS used by the second UE and/or the indication information, that context synchronization needs to be performed between the first EAS and the second EAS, the second EES sends an EAS selection announcement request to the first EES, where the EAS selection announcement request carries the identifier of the second UE, the identifier of the UE group, and the second information of the second EAS. Correspondingly, the first EES may receive the EAS selection announcement request.

1011: The first EES sends an EAS synchronization request to the first EAS, where the EAS synchronization request carries the identifier of the second UE, the identifier of the UE group, and the second information of the second EAS. Correspondingly, the first EAS may receive the EAS synchronization request.

In this embodiment of this application, after receiving the EAS synchronization request, the first EAS may perform step 1014.

1012: The first EES sends an EAS selection announcement response to the second EES.

1013: If determining that the second UE uses the second EAS, the second UE sends the identifier of the first UE, the identifier of the UE group, and the second information of the first EAS to the second EAS. Correspondingly, the second EAS may receive the identifier of the first UE, the identifier of the UE group, and the second information of the first EAS.

Specifically, an AC in the second UE may send the identifier of the first UE, the identifier of the UE group, and the second information of the first EAS to the second EAS. In other words, in this embodiment of this application, an application layer of the second UE may notify the second EAS to perform application context synchronization with the first EAS.

In this embodiment of this application, after receiving the identifier of the first UE, the identifier of the UE group, and the second information of the first EAS, the second EAS may perform step 1015.

1014: The first EAS synchronizes, based on the second information of the second EAS, an application context corresponding to the UE group with the second EAS.

1015: The second EAS synchronizes, based on the information about the first EAS, an application context corresponding to the UE group with the first EAS.

In a possible embodiment, the identifier of the first UE and/or the identifier of the UE group that are/is carried in the common EAS announcement request in step 1003, and the identifier of the first UE and/or the identifier of the UE group that are/is carried in the EAS discovery response in step 1007 are optional. The identifier of the first UE and/or the identifier of the UE group in step 1013 are/is optional.

In a possible embodiment, the identifier of the second UE and/or the identifier of the UE group that are/is carried in the EAS discovery request in step 1005, the identifier of the second UE and/or the identifier of the UE group that are/is carried in the EAS selection announcement request in step 1010, and the identifier of the second UE and/or the identifier of the UE group that are/is carried in the EAS synchronization request in step 1011 are optional.

It can be learned that, according to the method described in FIG. 10A and FIG. 10B, the second UE may determine, based on the service area and/or the data center information and/or the performance information corresponding to the first EAS used by the first UE, whether the second UE uses the first EAS, instead of directly determining the first EAS used by the first UE as an EAS used by the second UE. This helps the second UE connect to a better EAS to obtain an application service, so as to obtain a better application service. In addition, if the second UE does not use the first EAS, application context synchronization may be performed between the second EAS and the first EAS, to ensure data consistency between different UEs in a same UE group, so that a service of a UE in the UE group can be normally performed.

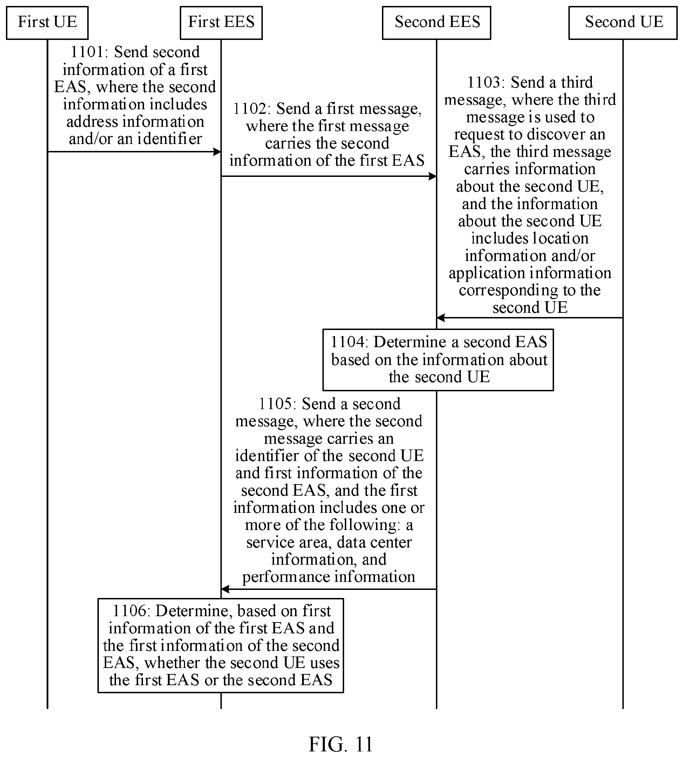

FIG. 11 is a schematic flowchart of a communication method for edge computing according to an embodiment of this application.

1101: A first UE sends second information of a first EAS to a first EES, where the second information includes address information and/or an identifier. The first EAS is an EAS used by the first UE. Correspondingly, the first EES may receive the second information of the first EAS.

For a specific implementation of step 1101, refer to the specific implementation of step 401. Details are not described herein.

1102: The first EES sends a first message to a second EES, where the first message carries the second information of the first EAS. Correspondingly, the second EES may receive the first message.

In a possible embodiment, the first message may be a common EAS announcement request.

1103: The second UE sends a third message to the second EES, where the third message is used to request to discover an EAS, the third message carries information about the second UE, and the information about the second UE includes location information and/or application information corresponding to the second UE. The second UE and the first UE are in a same UE group. Correspondingly, the second EES may receive the third message.

For descriptions of the information about the second UE, refer to the descriptions of the information about the second UE in the embodiment corresponding to FIG. 5. Details are not described herein.

In a possible embodiment, the third message may be an EAS discovery request.

1104: The second EES determines a second EAS based on the information about the second UE.

There are the following two implementations in which the second EES determines the second EAS based on the information about the second UE.

Manner 1: If the second EES determines, based on the information about the second UE, an EAS that meets a requirement of the second UE, the EAS is the second EAS.

Manner 2: If the second EES determines, based on the information about the second UE, a plurality of EASs that meet a requirement of the second UE, the second EES may feed back the plurality of EASs to the second UE, and the second UE selects one EAS from the plurality of EASs. The EAS selected by the second UE is the second EAS. The second UE notifies the second EES of the second EAS.

1105: The second EES sends a second message to the first EES, where the second message carries an identifier of the second UE and first information of the second EAS, and the first information includes one or more of the following: a service area, data center information, and performance information. Correspondingly, the first EES may receive the second message.

Optionally, the first EES may further determine, based on the first information of the first EAS, the first information of the second EAS, and the delay information or the response time information between the data center corresponding to the first EAS/first EES and the data center corresponding to the second EAS/second EES, or the delay information or the response time information between the first EAS/first EES and the second EAS/second EES, whether to use the first EAS or the second EAS.

Optionally, the delay information or the response time information between the data center corresponding to the first EAS/first EES and the data center corresponding to the second EAS/second EES may be preconfigured in the first EES. Optionally, the delay information or the response time information between the first EAS/first EES and the second EAS/second EES may be preconfigured in the first EES.

Optionally, the second message may further carry delay information or response time information between a data center corresponding to the first EAS/first EES and a data center corresponding to the second EAS/second EES, or delay information or response time information between the first EAS/first EES and the second EAS/second EES. Optionally, the delay information or the response time information between the data center corresponding to the first EAS/first EES and the data center corresponding to the second EAS/second EES may be preconfigured in the second EES. Optionally, the delay information or the response time information between the first EAS/first EES and the second EAS/second EES may be preconfigured in the second EES.

1106: The first EES determines, based on the first information of the first EAS and first information of the second EAS, whether the second UE uses the first EAS or the second EAS.

The first information of the first EAS includes one or more of the following: a service area (service area) corresponding to the first EAS, data center information corresponding to the first EAS, and performance information corresponding to the first EAS. For descriptions of the service area corresponding to the first EAS, the data center information corresponding to the EAS, and the performance information corresponding to the EAS, refer to the descriptions in the embodiment corresponding to FIG. 4. Details are not described herein.

A specific implementation in which the first EES determines, based on the first information of the first EAS and the first information of the second EAS, whether the second UE uses the first EAS or the second EAS is the same as a specific implementation in which the second EES determines, based on the first information of the first EAS and the first information of the second EAS, whether the second UE uses the first EAS or the second EAS described in the embodiment corresponding to FIG. 5. Details are not described herein.

In a possible embodiment, the first message may further carry an identifier of the first UE and/or an identifier of a UE group in which the first UE is located.

In a possible embodiment, the third message may further carry an identifier of the second UE and/or an identifier of a UE group in which the second UE is located.

In a possible embodiment, the second message may further carry an identifier of a UE group in which the second UE is located.

It can be learned that, according to the method described in FIG. 11, the first EES may determine, based on the service area and/or the data center information and/or the performance information corresponding to the first EAS used by the first UE, whether the second UE uses the first EAS, instead of directly determining the first EAS used by the first UE as an EAS used by the second UE. This helps the second UE connect to a better EAS to obtain an application service, so as to obtain a better application service.

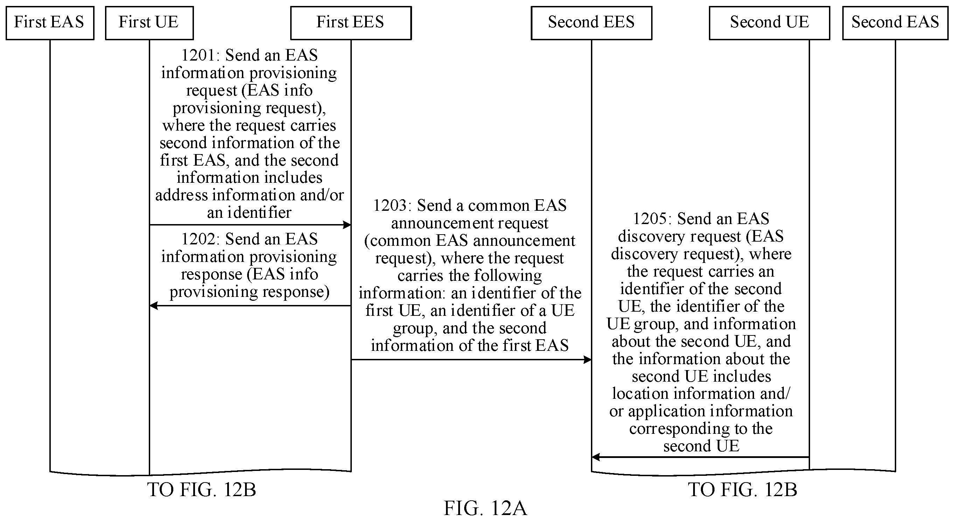

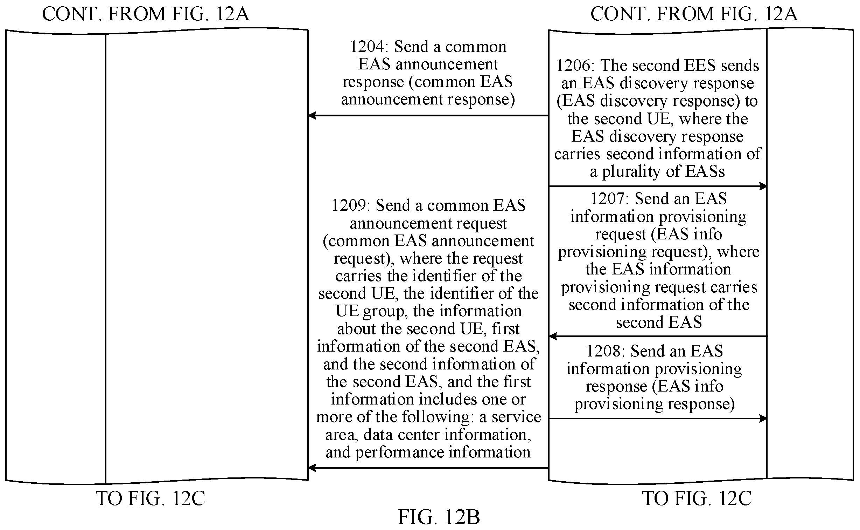

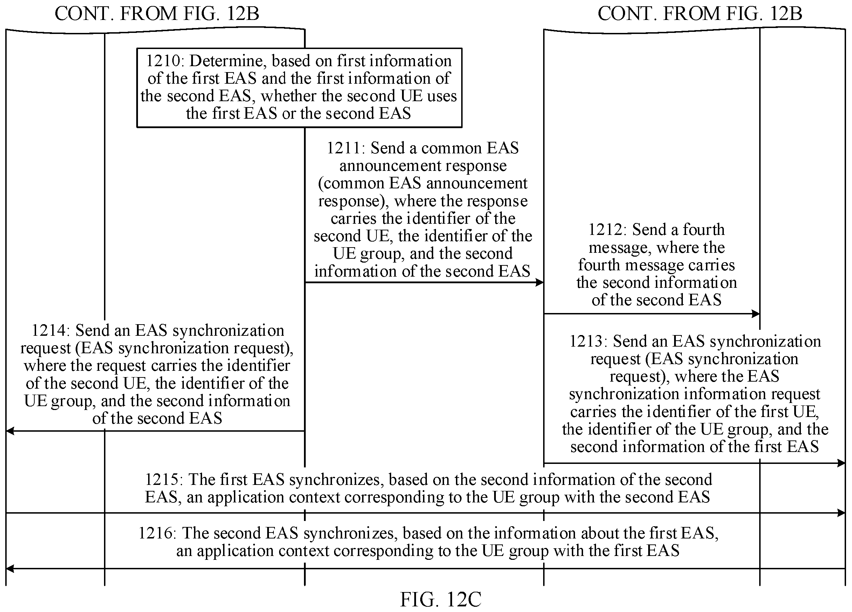

FIG. 12A to FIG. 12C are a schematic flowchart of a communication method for edge computing according to an embodiment of this application. A message name in the method procedure shown in FIG. 12A to FIG. 12C is merely a specific example. Information whose transmission is performed in the method procedure shown in FIG. 12A to FIG. 12C may alternatively be carried in another message for transmission. This is not limited in this embodiment of this application.

1201: A first UE sends an EAS information provisioning request to a first EES, where the EAS information provisioning request carries second information of a first EAS, and the second information includes address information and/or an identifier. The first EAS is an EAS used by the first UE. Correspondingly, the first EES may receive the EAS information provisioning request.

1202: The first EES sends an EAS information provisioning response to the first UE.

For specific implementations of step 1201 to step 1202, refer to the specific implementations of step 601 to step 602. Details are not described herein.

1203: The first EES sends a common EAS announcement request to a second EES, where the common EAS announcement request carries the following information: an identifier of the first UE, an identifier of a UE group, and the second information of the first EAS. The UE group includes the first UE and a second UE. Correspondingly, the second EES may receive the common EAS announcement request.

1204: The second EES sends a common EAS announcement response to the first EES.

1205: The second UE sends an EAS discovery request to the second EES, where the EAS discovery request is used to request to discover an EAS, the EAS discovery request carries an identifier of the second UE, the identifier of the UE group, and information about the second UE, and the information about the second UE includes location information and/or application information corresponding to the second UE. Correspondingly, the second EES may receive the EAS discovery request.

1206: The second EES sends an EAS discovery response to the second UE, where the EAS discovery response carries second information of a plurality of EASs. Correspondingly, the second UE may receive the EAS discovery response.

1207: The second UE sends an EAS information provisioning request to the second EES, where the EAS information provisioning request carries second information of the second EAS. Correspondingly, the second EES may receive the EAS information provisioning request.

1208: The second EES sends an EAS information provisioning response to the second UE.

1209: The second EES sends a common EAS announcement request to the first EES, where the request carries the identifier of the second UE, the identifier of the UE group, the information about the second UE, the first information of the second EAS, and the second information of the second EAS, and the first information includes one or more of the following: a service area, data center information, and performance information. Correspondingly, the first EES may receive the common EAS announcement request.

Optionally, the first EES may further determine, based on the first information of the first EAS, the first information of the second EAS, and the delay information or the response time information between the data center corresponding to the first EAS/first EES and the data center corresponding to the second EAS/second EES, or the delay information or the response time information between the first EAS/first EES and the second EAS/second EES, whether to use the first EAS or the second EAS.

Optionally, the delay information or the response time information between the data center corresponding to the first EAS/first EES and the data center corresponding to the second EAS/second EES may be preconfigured in the first EES. Optionally, the delay information or the response time information between the first EAS/first EES and the second EAS/second EES may be preconfigured in the first EES.

Optionally, the common EAS announcement request may further carry delay information or response time information between a data center corresponding to the first EAS/first EES and a data center corresponding to the second EAS/second EES, or delay information or response time information between the first EAS/first EES and the second EAS/second EES. Optionally, the delay information or the response time information between the data center corresponding to the first EAS/first EES and the data center corresponding to the second EAS/second EES may be preconfigured in the second EES. Optionally, the delay information or the response time information between the first EAS/first EES and the second EAS/second EES may be preconfigured in the second EES.

1210: The first EES determines, based on the first information of the first EAS and first information of the second EAS, whether the second UE uses the first EAS or the second EAS.

For specific implementations of step 1203 to step 1210, refer to the specific implementations of step 1101 to step 1106. Details are not described herein.

1211: The first EES sends a common EAS announcement response to the second EES, where the response carries the identifier of the second UE, the identifier of the UE group, and second information of an EAS used by the second UE. Correspondingly, the second EES may receive the common EAS announcement response.

In FIG. 12A to FIG. 12C, an example in which the EAS used by the second UE is the second EAS is used.

1212: The second EES sends a fourth message to the second UE, where the fourth message carries the second information of the EAS used by the second UE. Correspondingly, the second UE may receive the fourth message.

If the EAS used by the second UE is the first EAS, after receiving the fourth message, the second UE may communicate with the first EAS based on the second information of the first EAS.

If the EAS used by the second UE is the second EAS, after receiving the fourth message, the second UE may communicate with the second EAS based on the second information of the second EAS.

1213: The second EES sends an EAS synchronization request to the second EAS, where the EAS synchronization request carries the identifier of the first UE, the identifier of the UE group, and the second information of the first EAS. Correspondingly, the second EAS may receive the EAS synchronization request.

In this embodiment of this application, after receiving the EAS synchronization request, the second EAS may perform step 1216.

1214: If determining that the second UE uses the second EAS, the first EES sends an EAS synchronization request to the first EAS, where the EAS synchronization request carries the identifier of the second UE, the identifier of the UE group, and the second information of the second EAS. Correspondingly, the first EAS may receive the EAS synchronization request.

In this embodiment of this application, after receiving the EAS synchronization request, the first EAS may perform step 1215.

1215: The first EAS synchronizes, based on the second information of the second EAS, an application context corresponding to the UE group with the second EAS.

1216: The second EAS synchronizes, based on the information about the first EAS, an application context corresponding to the UE group with the first EAS.

For specific implementations of step 1201 to step 1210, refer to the related descriptions in the embodiment corresponding to FIG. 11. Details are not described herein.

In a possible embodiment, the identifier of the first UE and/or the identifier of the UE group that are/is carried in the common EAS announcement request in step 1203, and the identifier of the first UE and/or the identifier of the UE group that are/is carried in the EAS synchronization request in step 1213 are optional.

In a possible embodiment, the identifier of the second UE and/or the identifier of the UE group that are/is carried in the EAS discovery request in step 1205, the identifier of the second UE and/or the identifier of the UE group that are/is carried in the EAS selection announcement request in step 1209, the identifier of the second UE and/or the identifier of the UE group that are/is carried in the EAS selection announcement response in step 1211, and the identifier of the second UE and/or the identifier of the UE group that are/is carried in the EAS synchronization request in step 1214 are optional.

It can be learned that, according to the method described in FIG. 12A to FIG. 12C, the first EES may determine, based on the service area and/or the data center information and/or the performance information corresponding to the first EAS used by the first UE, whether the second UE uses the first EAS, instead of directly determining the first EAS used by the first UE as an EAS used by the second UE. This helps the second UE connect to a better EAS to obtain an application service, so as to obtain a better application service. In addition, if the second UE does not use the first EAS, application context synchronization may be performed between the second EAS and the first EAS, to ensure data consistency between different UEs in a same UE group, so that a service of a UE in the UE group can be normally performed.

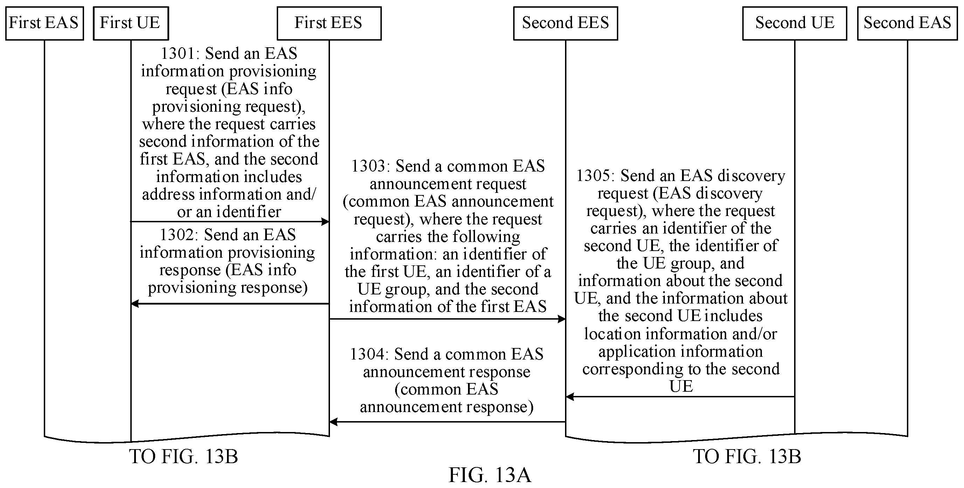

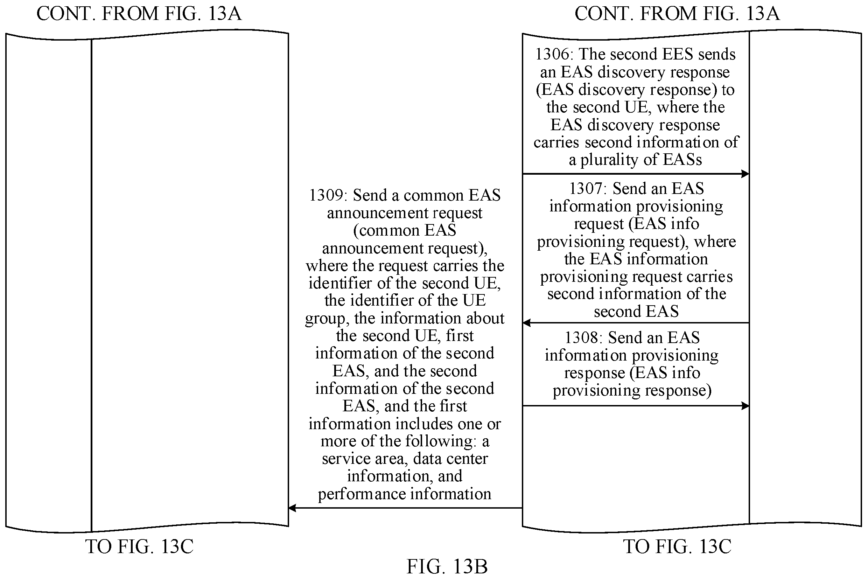

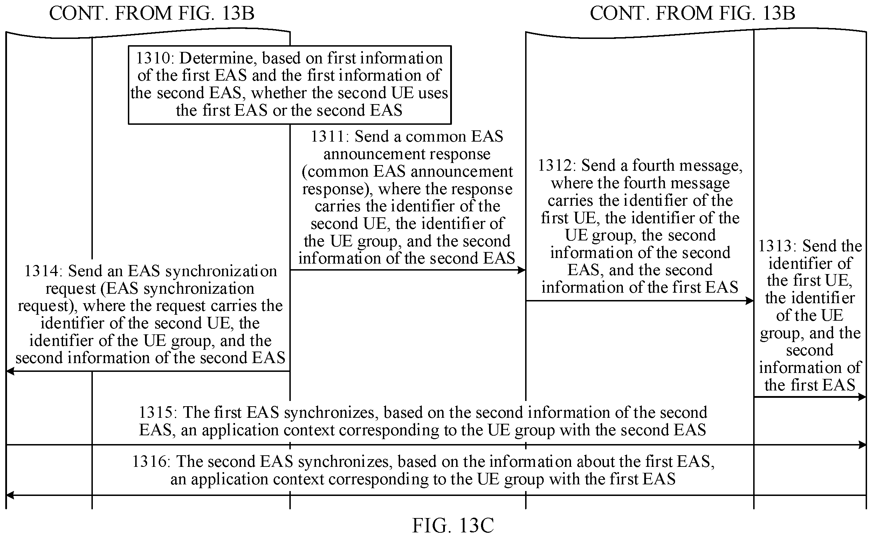

FIG. 13A to FIG. 13C are a schematic flowchart of a communication method for edge computing according to an embodiment of this application. A message name in the method procedure shown in FIG. 13A to FIG. 13C is merely a specific example. Information whose transmission is performed in the method procedure shown in FIG. 13A to FIG. 13C may alternatively be carried in another message for transmission. This is not limited in this embodiment of this application.

1301: A first UE sends an EAS information provisioning request to a first EES, where the EAS information provisioning request carries second information of a first EAS, and the second information includes address information and/or an identifier. The first EAS is an EAS used by the first UE. Correspondingly, the first EES may receive the EAS information provisioning request.

1302: The first EES sends an EAS information provisioning response to the first UE.

For specific implementations of step 1301 to step 1302, refer to the specific implementations of step 601 to step 602. Details are not described herein.

1303: The first EES sends a common EAS announcement request to a second EES, where the common EAS announcement request carries the following information: an identifier of the first UE, an identifier of a UE group, and the second information of the first EAS. The UE group includes the first UE and a second UE. Correspondingly, the second EES may receive the common EAS announcement request.

1304: The second EES sends a common EAS announcement response to the first EES.

1305: The second UE sends an EAS discovery request to the second EES, where the EAS discovery request is used to request to discover an EAS, the EAS discovery request carries an identifier of the second UE, the identifier of the UE group, and information about the second UE, and the information about the second UE includes location information and/or application information corresponding to the second UE. Correspondingly, the second EES may receive the EAS discovery request.

1306: The second EES sends an EAS discovery response to the second UE, where the EAS discovery response carries second information of a plurality of EASs. Correspondingly, the second UE may receive the EAS discovery response.

1307: The second UE sends an EAS information provisioning request to the second EES, where the EAS information provisioning request carries second information of the second EAS. Correspondingly, the second EES may receive the EAS information provisioning request.

1308: The second EES sends an EAS information provisioning response to the second UE.

1309: The second EES sends a common EAS announcement request to the first EES, where the request carries the identifier of the second UE, the identifier of the UE group, the information about the second UE, the first information of the second EAS, and the second information of the second EAS, and the first information includes one or more of the following: a service area, data center information, and performance information. Correspondingly, the first EES may receive the common EAS announcement request.

Optionally, the first EES may further determine, based on the first information of the first EAS, the first information of the second EAS, and the delay information or the response time information between the data center corresponding to the first EAS/first EES and the data center corresponding to the second EAS/second EES, or the delay information or the response time information between the first EAS/first EES and the second EAS/second EES, whether to use the first EAS or the second EAS.

Optionally, the delay information or the response time information between the data center corresponding to the first EAS/first EES and the data center corresponding to the second EAS/second EES may be preconfigured in the first EES. Optionally, the delay information or the response time information between the first EAS/first EES and the second EAS/second EES may be preconfigured in the first EES.

Optionally, the common EAS announcement request may further carry delay information or response time information between a data center corresponding to the first EAS/first EES and a data center corresponding to the second EAS/second EES, or delay information or response time information between the first EAS/first EES and the second EAS/second EES. Optionally, the delay information or the response time information between the data center corresponding to the first EAS/first EES and the data center corresponding to the second EAS/second EES may be preconfigured in the second EES. Optionally, the delay information or the response time information between the first EAS/first EES and the second EAS/second EES may be preconfigured in the second EES.

1310: The first EES determines, based on the first information of the first EAS and first information of the second EAS, whether the second UE uses the first EAS or the second EAS.

For specific implementations of step 1303 to step 1310, refer to the specific implementations of step 1101 to step 1106. Details are not described herein.

1311: The first EES sends a common EAS announcement response to the second EES, where the response carries the identifier of the second UE, the identifier of the UE group, and second information of an EAS used by the second UE. Correspondingly, the second EES may receive the common EAS announcement response.

1312: The second EES sends a fourth message to the second UE, where the fourth message carries the second information of the EAS used by the second UE. Correspondingly, the second UE may receive the fourth message.

If the EAS used by the second UE is the first EAS, after receiving the fourth message, the second UE may communicate with the first EAS based on the second information of the first EAS.

If the EAS used by the second UE is the second EAS, after receiving the fourth message, the second UE may communicate with the second EAS based on the second information of the second EAS. If the EAS used by the second UE is the second EAS, the fourth message further carries the identifier of the first UE, the identifier of the UE group, and the second information of the first EAS. In FIG. 13A to FIG. 13C, an example in which the EAS used by the second UE is the second EAS is used.

1313: The second UE sends the identifier of the first UE, the identifier of the UE group, and the second information of the first EAS to the second EAS. Correspondingly, the second EAS may receive the identifier of the first UE, the identifier of the UE group, and the second information of the first EAS.

Specifically, an AC in the second UE may send the identifier of the first UE, the identifier of the UE group, and the second information of the first EAS to the second EAS. In other words, in this embodiment of this application, an application layer of the second UE may notify the second EAS to perform application context synchronization with the first EAS.

In this embodiment of this application, after receiving the identifier of the first UE, the identifier of the UE group, and the second information of the first EAS, the second EAS may perform step 1316.

1314: If determining that the second UE uses the second EAS, the first EES sends an EAS synchronization request to the first EAS, where the EAS synchronization request carries the identifier of the second UE, the identifier of the UE group, and the second information of the second EAS. Correspondingly, the first EAS may receive the EAS synchronization request.

In this embodiment of this application, after receiving the EAS synchronization request, the first EAS may perform step 1315.

1315: The first EAS synchronizes, based on the second information of the second EAS, an application context corresponding to the UE group with the second EAS.

1316: The second EAS synchronizes, based on the information about the first EAS, an application context corresponding to the UE group with the first EAS.

In a possible embodiment, the fourth message further carries indication information, where the indication information indicates that the second EAS needs to perform application context synchronization with the first EAS.

In a possible embodiment, the second response message further carries indication information, where the indication information indicates that the second EAS needs to perform application context synchronization with the first EAS.

In a possible embodiment, the identifier of the first UE and/or the identifier of the UE group that are/is carried in the common EAS announcement request in step 1303, and the identifier of the first UE and/or the identifier of the UE group that are/is carried in the fourth message in step 1312 are optional. The identifier of the first UE and/or the identifier of the UE group in step 1313 are/is optional.

In a possible embodiment, the identifier of the second UE and/or the identifier of the UE group that are/is carried in the EAS discovery request in step 1305, the identifier of the second UE and/or the identifier of the UE group that are/is carried in the EAS selection announcement request in step 1309, the identifier of the second UE and/or the identifier of the UE group that are/is carried in the EAS selection announcement response in step 1311, and the identifier of the second UE and/or the identifier of the UE group that are/is carried in the EAS synchronization request in step 1314 are optional.

It can be learned that, according to the method described in FIG. 13A to FIG. 13C, the first EES may determine, based on the service area and/or the data center information and/or the performance information corresponding to the first EAS used by the first UE, whether the second UE uses the first EAS, instead of directly determining the first EAS used by the first UE as an EAS used by the second UE. This helps the second UE connect to a better EAS to obtain an application service, so as to obtain a better application service. In addition, if the second UE does not use the first EAS, application context synchronization may be performed between the second EAS and the first EAS, to ensure data consistency between different UEs in a same UE group, so that a service of a UE in the UE group can be normally performed.

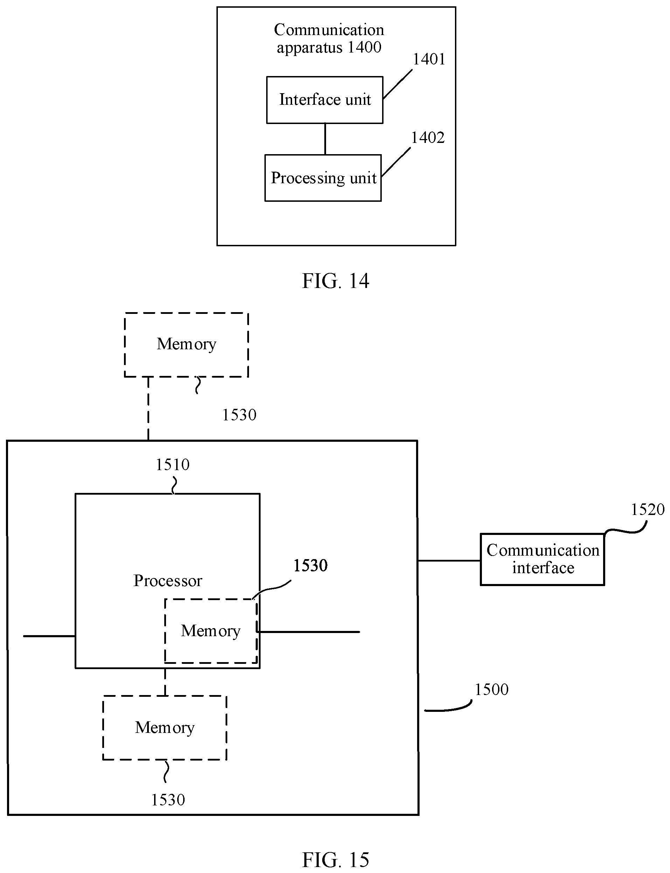

This application provides a communication apparatus. The communication apparatus may be configured to implement a function of the second EES, the first EES, the second UE, the first EAS, or the second EAS. The communication apparatus may be the second EES, the first EES, the second UE, the first EAS, or the second EAS. The communication apparatus includes modules or units that are in one-to-one correspondence with the methods/operations/steps/actions performed by the second EES, the first EES, the second UE, the first EAS, or the second EAS in the foregoing method embodiments. The units may be implemented by a hardware circuit, software, or a combination of a hardware circuit and software. FIG. 14 is a diagram of a structure of a communication apparatus 1400 according to an embodiment of this application. The communication apparatus 1400 may include an interface unit 1401 and a processing unit 1402. Specifically, the processing unit 1402 is configured to process signaling and/or data, where the signaling and/or data may be data received by the interface unit 1401, and processed signaling and/or data may also be sent by the interface unit 1401.

In an implementation, when the communication apparatus 1400 is the second EES,
the interface unit 1401 is configured to receive a first message sent by a first EES, where the first message carries the following information: an identifier of a UE group and first information of a first edge application server EAS, and the first information includes one or more of the following: a service area, data center information, and performance information; and the first EAS is an EAS used by a first UE, and the UE group includes the first UE and a second UE.

In a possible embodiment, the interface unit 1401 is further configured to receive a second message sent by the second UE, where the second message is used to request to discover an EAS, the second message carries information about the second UE, and the information about the second UE includes location information and/or application information corresponding to the second UE; and the processing unit 1402 is configured to determine, based on the information about the second UE and the first information of the first EAS, whether the second UE uses the first EAS.

In a possible embodiment, that the processing unit 1402 determines, based on the information about the second UE and the first information of the first EAS, whether the second UE uses the first EAS includes: The processing unit 1402 determines the second EAS based on the information about the second UE. The processing unit 1402 determines, based on the first information of the first EAS and first information of the second EAS, whether the second LTE uses the first EAS or the second EAS.

In a possible embodiment, the first message further carries second information of the first EAS, and the second information includes an identifier and/or address information. The interface unit 1401 is further configured to send a second response message corresponding to the second message to the second UE, where if it is determined that the second UE uses the first EAS, the second response message carries the second information of the first EAS; or if it is determined that the second UE uses the second EAS, the second response message carries second information of the second EAS.

In a possible embodiment, the interface unit 1401 is further configured to send the second information of the first EAS to the second EAS if determining that the second UE uses the second EAS; or the interface unit 1401 is further configured to send the second information of the second EAS to the first EES if determining that the second UE uses the second EAS.

In a possible embodiment, if it is determined that the second UE uses the second EAS, the second response message further carries the second information of the first EAS. The interface unit 1401 is further configured to send the second information of the second EAS to the first EES if determining that the second UE uses the second EAS.

In a possible embodiment, if it is determined that the second UE uses the second EAS, the second response message further carries indication information, where the indication information indicates that the second EAS needs to perform application context synchronization with the first EAS.

In a possible embodiment, the interface unit 1401 is further configured to receive a second message sent by the second UE, where the second message is used to request to discover an EAS, the second message carries information about the second UE, and the information about the second UE includes location information and/or application information corresponding to the second UE. The processing unit 1402 is configured to determine a second EAS based on the information about the second UE. The interface unit 1401 is further configured to send a second response message corresponding to the second message to the second UE, where the second response message carries the first information of the first EAS and first information of the second EAS.

In a possible embodiment, the second response message further carries second information of the first EAS and second information of the second EAS, and the second information includes an identifier and/or address information.

In a possible embodiment, the interface unit 1401 is further configured to receive second information of the EAS used by the second UE and/or indication information that are/is sent by the second UE, where the indication information indicates whether the second UE uses the first EAS or indicates whether application context synchronization needs to be performed, and the EAS used by the second UE is one of the second EAS and the first EAS. The interface unit 1401 is further configured to send the second information of the second EAS to the first EES if the second EES determines, based on the information about the EAS used by the second UE and/or the indication information, that context synchronization needs to be performed between the first EAS and the second EAS.

In a possible embodiment, the interface unit 1401 is further configured to send the second information of the first EAS to the second EAS if the second EES determines, based on the information about the EAS selected by the second UE and/or the indication information, that context synchronization needs to be performed between the first EAS and the second EAS.

In an implementation, when the communication apparatus 1400 is the first EES,
the interface unit 1401 is configured to send a first message to a second EES, where the first message carries the following information: an identifier of a UE group and first information of a first EAS, and the first information includes one or more of the following: a service area, data center information, and performance information; and the first EAS is an EAS used by a first UE, and the UE group includes the first UE and a second UE.

In a possible embodiment, the interface unit 1401 is further configured to: receive second information of a second EAS sent by the second EES, where the second information includes an identifier and/or address information, and the second EAS is an EAS used by the second UE; and send the second information of the second EAS to the first EAS.

In an implementation, when the communication apparatus 1400 is the second UE,
the interface unit 1401 is configured to send a second message to a second edge enabler server EES, where the second message is used to request to discover an EAS, the second message carries information about the second UE, and the information about the second UE includes location information and/or application information corresponding to the second UE. The interface unit 1401 is further configured to receive a second response message that corresponds to the second message and that is sent by the second EES, where the second response message carries first information of a first EAS and first information of a second EAS, and the first information includes one or more of the following: a service area, corresponding data center information, and performance information; and the first EAS is an EAS used by a first UE, and a UE group includes the first UE and the second UE. The processing unit 1402 is configured to determine, based on the first information of the first EAS and the first information of the second EAS, whether the second UE uses the first EAS or the second EAS.

In a possible embodiment, the second response message further carries second information of the first EAS and second information of the second EAS, and the second information includes an identifier and/or address information.

If determining that the second UE uses the first EAS, the interface unit 1401 is further configured to communicate with the first EAS based on the second information of the first EAS; or
if determining that the second UE uses the second EAS, the interface unit 1401 is further configured to communicate with the second EAS based on the second information of the second EAS.

In a possible embodiment, the second UE sends, to the second EES, second information of an EAS used by the second UE and/or indication information, where the indication information indicates whether the second UE uses the first EAS or indicates whether application context synchronization needs to be performed.

In a possible embodiment, if determining that the second UE uses the second EAS, the second UE sends the second information of the first EAS to the second EAS.

In an implementation, when the communication apparatus 1400 is the first EAS,
the interface unit 1401 is configured to receive second information of a second EAS sent by a first edge enabler server EES, where the second information includes an identifier and/or address information, the first EAS is an EAS used by a first UE, the second EAS is an EAS used by a second UE, and the first UE and the second UE are included in a UE group; and
the interface unit 1401 is further configured to synchronize, based on the second information of the second EAS, an application context corresponding to the UE group with the second EAS.

In an implementation, when the communication apparatus 1400 is the second UE,
the interface unit 1401 is configured to send a second message to a second edge enabler server EES, where the second message is used to request to discover an EAS, the second message carries information about the second UE, and the information about the second UE includes location information and/or application information corresponding to the second UE;
the interface unit 1401 is further configured to receive a second response message that corresponds to the second message and that is sent by the second EES, where the second response message carries second information of a second EAS and second information of a first EAS, the second EAS is an EAS used by the second UE, the first EAS is an EAS used by a first UE, the first UE and the second UE are included in a UE group, and the second information includes an identifier and/or address information; and
the interface unit 1401 is configured to send the second information of the first EAS to the second EAS.

In a possible embodiment, the second response message further carries indication information, where the indication information indicates that the second EAS needs to perform application context synchronization with the first EAS.

In an implementation, when the communication apparatus 1400 is the second EAS,
the interface unit 1401 is configured to receive second information of a first EAS sent by a second edge enabler server EES or a second user equipment UE, where the second information includes an identifier and/or address information, the first EAS is an EAS used by a first UE, the second EAS is an EAS used by a second UE, and the first UE and the second UE are included in a UE group; and
the interface unit 1401 is further configured to synchronize, based on the second information of the first EAS, an application context corresponding to the UE group with the first EAS.

In an implementation, when the communication apparatus 1400 is the first EES,
the interface unit 1401 is configured to send a first message to a second EES, where the first message carries second information of a first edge application server EAS, the second information includes an identifier and/or address information, and the first EAS is an EAS used by a first UE. The interface unit 1401 is configured to receive a second message sent by the second EES, where the second message carries an identifier of a second UE and first information of a second EAS, and the first information includes one or more of the following: a service area, data center information, and performance information. The processing unit 1402 is configured to determine, based on first information of the first EAS and the first information of the second EAS, whether the second UE uses the first EAS or the second EAS, where the first UE and the second UE are included in a same UE group.

In a possible embodiment, the second message further carries information about the second UE, and the information about the second UE includes location information and/or application information corresponding to the second UE. That the processing unit 1402 determines, based on the first information of the first EAS and the first information of the second EAS, whether the second UE uses the first EAS or the second EAS includes: The processing unit 1402 determines, based on the information about the second UE, the first information of the first EAS, and the first information of the second EAS, whether the second UE uses the first EAS or the second EAS.

In a possible embodiment, the second message further carries second information of the second EAS. The interface unit 1401 is further configured to send a second response message corresponding to the second message to the second EES, where the second response message carries the identifier of the second UE and second information of the EAS used by the second UE.

In a possible embodiment, the interface unit 1401 is further configured to send the second information of the second EAS to the first EAS if determining that the second UE uses the second EAS.

In a possible embodiment, if it is determined that the second UE uses the second EAS, the second response message further carries indication information, where the indication information indicates that the second EAS needs to perform application context synchronization with a common EAS.

In an implementation, when the communication apparatus 1400 is the second EES,
the interface unit 1401 is configured to receive a first message sent by a first EES, where the first message carries second information of a first edge application server EAS, the second information includes an identifier and/or address information, and the first EAS is an EAS used by a first UE. The interface unit 1401 is further configured to receive a third message sent by a second UE, where the third message is used to request to discover an EAS, the second message carries information about the second UE, the information about the second UE includes location information and/or application information corresponding to the second UE, and the first UE and the second UE are included in a same UE group. The processing unit 1402 is configured to determine a second EAS based on the information about the second UE. The interface unit 1401 is further configured to send a second message to the first EES, where the second message carries an identifier of the second UE and first information of the second EAS, the first information includes one or more of the following: a service area, data center information, and performance information, and the first information of the second EAS is used to determine whether the second UE uses the first EAS or the second EAS.

In a possible embodiment, the second message further carries information about the second UE, and the information about the second UE includes location information and/or application information corresponding to the second UE.

In a possible embodiment, the second message further carries second information of the second EAS. The interface unit 1401 is further configured to receive a second response message that corresponds to the second message and that is sent by the first EES, where the second response message carries the identifier of the second UE and second information of an EAS used by the second UE, and the EAS used by the second UE is the second EAS or the first EAS. The interface unit 1401 is further configured to send a fourth message to the second UE, where the fourth message carries the second information of the EAS used by the second UE.

In a possible embodiment, the EAS used by the second UE is the second EAS, and the interface unit 1401 is further configured to send second information of the first EAS to the second EAS.

In a possible embodiment, the EAS used by the second UE is the second EAS, and the fourth message further carries the second information of the first EAS.

In a possible embodiment, the fourth message further carries indication information, where the indication information indicates that the second EAS needs to perform application context synchronization with the first EAS.

In a possible embodiment, the second response message further carries indication information, where the indication information indicates that the second EAS needs to perform application context synchronization with the first EAS.

In an implementation, when the communication apparatus 1400 is the second UE,
the interface unit 1401 is configured to send a third message to a second EES, where the third message is used to request to discover an EAS, the second message carries information about the second UE, and the information about the second UE includes location information and/or application information corresponding to the second UE. The interface unit 1401 is further configured to receive a fourth message sent by the second EES, where the fourth message carries second information of an EAS used by the second UE and second information of a first EAS, the second information includes an identifier and/or address information, the EAS used by the second UE is a second EAS, the first EAS is an EAS used by a first UE, and the first UE and the second UE are included in a same UE group. The second UE sends the second information of the first EAS to the second EAS.

In a possible embodiment, the fourth message further carries indication information, where the indication information indicates that the second EAS needs to perform application context synchronization with the first EAS.

FIG. 15 shows a communication apparatus 1500 according to an embodiment of this application. The communication apparatus 1500 is configured to implement a function of the second EES, the first EES, the second UE, the first EAS, or the second EAS. The apparatus may be a communication device or an apparatus used in the communication device. The communication device may be the second EES, the first EES, the second UE, the first EAS, or the second EAS. The apparatus used in the communication device may be a chip system or a chip in the communication device. The chip system may include a chip, or may include a chip and another discrete component.

The communication apparatus 1500 includes at least one processor 1510, configured to implement a processing function of a device (for example, the second EES, the first EES, the second UE, the first EAS, or the second EAS) in the method provided in embodiments of this application. The communication apparatus 1500 further includes a communication interface 1520, configured to implement sending and receiving operations of a device (for example, the second EES, the first EES, the second UE, the first EAS, or the second EAS) in the method provided in embodiments of this application. In embodiments of this application, the communication interface may be a transceiver, a circuit, a bus, a module, or another type of communication interface, and is configured to communicate with another device through a transmission medium. For example, the communication interface 1520 is used by an apparatus in the communication apparatus 1500 to communicate with another device. The processor 1510 receives and sends data through the communication interface 1520, and is configured to implement the methods in the foregoing method embodiments.

The communication apparatus 1500 may further include at least one memory 1530 that is configured to store program instructions and/or data. The memory 1530 is coupled to the processor 1510. The coupling in this embodiment of this application may be an indirect coupling or a communication connection between apparatuses, units, or modules in an electrical form, a mechanical form, or another form, and is used for information exchange between the apparatuses, the units, or the modules. The processor 1510 may cooperate with the memory 1530. The processor 1510 may execute the program instructions stored in the memory 1530. At least one of the at least one memory may be included in the processor.

A specific connection medium between the communication interface 1520, the processor 1510, and the memory 1530 is not limited in this embodiment of this application. In this embodiment of this application, in FIG. 15, the memory 1530, the processor 1510, and the communication interface 1520 are connected to each other through a bus. The bus is represented by a bold line in FIG. 15. A connection manner between other components is merely an example for description, and imposes no limitation. The bus may be classified into an address bus, a data bus, a control bus, and the like. For ease of representation, only one thick line is used to represent the bus in FIG. 15, but this does not mean that there is only one bus or only one type of bus.

When the communication apparatus 1500 is specifically an apparatus used for a device (for example, the second EES, the first EES, the second UE, the first EAS, or the second EAS), for example, when the communication apparatus 1500 is specifically a chip or a chip system, the communication interface 1520 may output or receive a baseband signal. When the communication apparatus 1500 is specifically a device (for example, the second EES, the first EES, the second UE, the first EAS, or the second EAS), the communication interface 1520 may output or receive a radio frequency signal. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

It should be noted that the communication interface 1520 may be configured to perform a function of the interface unit 1401, and the processor 1510 may be configured to perform a function of the processing unit 1402. Details are not described herein.

When the communication apparatus is a chip used in the second EES, the first EES, the second UE, the first EAS, or the second EAS, the chip implements a function of the second EES, the first EES, the second UE, the first EAS, or the second EAS in the foregoing method embodiments, and the chip receives information from another network element; or the chip sends information to another network element.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware device, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in the ASIC. In addition, the ASIC may be located in a core network device or a terminal. Certainly, the processor and the storage medium may alternatively exist in the terminal or the access network device as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or other programmable apparatuses. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk, or a magnetic tape; may be an optical medium, for example, a DVD; or may be a semiconductor medium, for example, a solid state drive (solid state drive, SSD).

In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

An embodiment of this application further provides a computer-readable storage medium. The computer-readable storage medium stores computer-executable instructions, and when the computer-executable instructions are executed, the methods performed by the terminal or the access network device in the foregoing method embodiments are implemented.

An embodiment of this application further provides a computer program product. The computer program product includes a computer program, and when the computer program is executed, the methods performed by the terminal or the access network device in the foregoing method embodiments are implemented.

An embodiment of this application further provides a communication system. The communication system includes a terminal or an access network device. The terminal is configured to perform the method performed by the terminal in the foregoing method embodiments. The access network device is configured to perform the methods performed by the access network device in the foregoing method embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

The descriptions of embodiments provided in this application may refer to each other, and the descriptions of embodiments have different focuses. For a part not described in detail in an embodiment, refer to the related descriptions in another embodiment. For ease of description and brevity, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that the foregoing embodiments are merely intended for describing the technical solutions of this application other than limiting this application. Although this application is described in detail with reference to the foregoing embodiments, a person of ordinary skill in the art should understand that modification may still be made to the technical solutions described in the foregoing embodiments or equivalent replacements may be made to some or all technical features thereof, without departing from the scope of the technical solutions of embodiments of this application.

## Claims

1. A communication method for edge computing, wherein the method comprises:
receiving, by a second edge enabler server EES, a first message sent by a first EES, wherein the first message carries the following information: an identifier of a UE group and first information of a first edge application server EAS, and the first information comprises one or more of the following: a service area, data center information, and performance information; and the first EAS is an EAS used by a first UE, and the UE group comprises the first UE and a second UE.

2. The method according to claim 1, wherein the method further comprises:
receiving, by the second EES, a second message sent by the second UE, wherein the second message is used to request to discover an EAS, the second message carries information about the second UE, and the information about the second UE comprises location information and/or application information corresponding to the second UE; and
determining, by the second EES based on the information about the second UE and the first information of the first EAS, whether the second UE uses the first EAS.

3. The method according to claim 2, wherein the determining, by the second EES based on the information about the second UE and the first information of the first EAS, whether the second UE uses the first EAS comprises:
determining, by the second EES, a second EAS based on the information about the second UE; and
determining, by the second EES based on the first information of the first EAS and first information of the second EAS, whether the second UE uses the first EAS or the second EAS.

4. The method according to claim 3, wherein the first message further carries second information of the first EAS, and the second information comprises an identifier and/or address information; and the method further comprises:
sending, by the second EES, a second response message corresponding to the second message to the second UE, wherein
if it is determined that the second UE uses the first EAS, the second response message carries the second information of the first EAS; or
if it is determined that the second UE uses the second EAS, the second response message carries second information of the second EAS.

5. The method according to claim 4, wherein the method further comprises:
if determining that the second UE uses the second EAS, sending, by the second EES, the second information of the first EAS to the second EAS; or
if determining that the second UE uses the second EAS, sending, by the second EES, the second information of the second EAS to the first EES.

6. The method according to claim 4, wherein if it is determined that the second UE uses the second EAS, the second response message further carries the second information of the first EAS; and the method further comprises:
if determining that the second UE uses the second EAS, sending, by the second EES, the second information of the second EAS to the first EES.

7. The method according to claim 6, wherein if it is determined that the second UE uses the second EAS, the second response message further carries indication information, and the indication information indicates that the second EAS needs to perform application context synchronization with the first EAS.

8. The method according to claim 1, wherein the method further comprises:
receiving, by the second EES, a second message sent by the second UE, wherein the second message is used to request to discover an EAS, the second message carries information about the second UE, and the information about the second UE comprises location information and/or application information corresponding to the second UE;
determining, by the second EES, a second EAS based on the information about the second UE; and
sending, by the second EES, a second response message corresponding to the second message to the second UE, wherein the second response message carries the first information of the first EAS and first information of the second EAS.

9. The method according to claim 8, wherein the second response message further carries second information of the first EAS and second information of the second EAS, and the second information comprises an identifier and/or address information.

10. The method according to claim 9, wherein the method further comprises:
receiving, by the second EES, second information of an EAS used by the second UE and/or indication information that are/is sent by the second UE, wherein the indication information indicates whether the second UE uses the first EAS or indicates whether application context synchronization needs to be performed, and the EAS used by the second UE is one of the second EAS and the first EAS; and
sending, by the second EES, the second information of the second EAS to the first EES if the second EES determines, based on the information about the EAS used by the second UE and/or the indication information, that context synchronization needs to be performed between the first EAS and the second EAS.

11. The method according to claim 10, wherein the method further comprises:
sending, by the second EES, the second information of the first EAS to the second EAS if the second EES determines, based on the information about the EAS selected by the second UE and/or the indication information, that context synchronization needs to be performed between the first EAS and the second EAS.

12. A communication method for edge computing, wherein the method comprises:
sending, by a first edge enabler server EES, a first message to a second EES, wherein the first message carries the following information: an identifier of a UE group and first information of a first EAS, and the first information comprises one or more of the following: a service area, data center information, and performance information; and the first EAS is an EAS used by a first UE, and the UE group comprises the first UE and a second UE.

13. The method according to claim 12, wherein the method further comprises:
receiving, by the first EES, second information of a second EAS sent by the second EES, wherein the second information comprises an identifier and/or address information, and the second EAS is an EAS used by the second UE; and
sending, by the first EES, the second information of the second EAS to the first EAS.

14. An edge application server EAS discovery method, wherein the method is applied to a second user equipment UE or a chip of the second UE, and the method comprises:
sending a second message to a second edge enabler server EES, wherein the second message is used to request to discover an EAS, the second message carries information about the second UE, and the information about the second UE comprises location information and/or application information corresponding to the second UE;
receiving a second response message that corresponds to the second message and that is sent by the second EES, wherein the second response message carries first information of a first EAS and first information of a second EAS, and the first information comprises one or more of the following: a service area, corresponding data center information, and performance information; and the first EAS is an EAS used by a first UE, and UE group comprises the first UE and the second UE; and
determining, based on the first information of the first EAS and the first information of the second EAS, whether the second UE uses the first EAS or the second EAS.

15. The method according to claim 14, wherein the second response message further carries second information of the first EAS and second information of the second EAS, and the second information comprises an identifier and/or address information; and the method further comprises:
if determining that the second UE uses the first EAS, communicating with the first EAS based on the second information of the first EAS; or
if determining that the second UE uses the second EAS, communicating with the second EAS based on the second information of the second EAS.

16. The method according to claim 15, wherein the method further comprises:
sending, to the second EES, second information of an EAS used by the second UE and/or indication information, wherein the indication information indicates whether the second UE uses the first EAS or indicates whether application context synchronization needs to be performed.

17. The method according to claim 16, wherein the method further comprises:
if determining that the second UE uses the second EAS, sending the second information of the first EAS to the second EAS.

18. An edge application server EAS discovery method, wherein the method comprises:
receiving, by a first edge application server EAS, second information of a second EAS sent by a first edge enabler server EES, wherein the second information comprises an identifier and/or address information, the first EAS is an EAS used by a first UE, the second EAS is an EAS used by a second UE, and the first UE and the second UE are comprised in a UE group; and
synchronizing, by the first EAS based on the second information of the second EAS, an application context corresponding to the UE group with the second EAS.

19. An edge application server EAS discovery method, wherein the method is applied to a second user equipment UE or a chip of the second UE, and the method comprises:
sending a second message to a second edge enabler server EES, wherein the second message is used to request to discover an EAS, the second message carries information about the second UE, and the information about the second UE comprises location information and/or application information corresponding to the second UE;
receiving a second response message that corresponds to the second message and that is sent by the second EES, wherein the second response message carries second information of a second EAS and second information of a first EAS, the second EAS is an EAS used by the second UE, the first EAS is an EAS used by a first UE, the first UE and the second UE are comprised in a UE group, and the second information comprises an identifier and/or address information; and
sending the second information of the first EAS to the second EAS.

20. The method according to claim 19, wherein the second response message further carries indication information, and the indication information indicates that the second EAS needs to perform application context synchronization with the first EAS.

21. An edge application server EAS discovery method, wherein the method comprises:
receiving, by a second edge application server EAS, second information of a first EAS sent by a second edge enabler server EES or a second user equipment UE, wherein the second information comprises an identifier and/or address information, the first EAS is an EAS used by a first UE, the second EAS is an EAS used by a second UE, and the first UE and the second UE are comprised in a UE group; and
synchronizing, by the second EAS based on the second information of the first EAS, an application context corresponding to the UE group with the first EAS.

22. A communication apparatus, comprising a unit configured to perform the method according to any one of claims 1 to 21.

23. A communication apparatus, comprising a processor and a memory, wherein the processor is coupled to the memory, and the processor is configured to implement the method according to any one of claims 1 to 21.

24. A chip, comprising a processor and an interface, wherein the processor is coupled to the interface, the interface is configured to receive or output a signal, and the processor is configured to execute code instructions, so that the method according to any one of claims 1 to 21 is performed.

25. A computer-readable storage medium, wherein the computer-readable storage medium stores computer-executable instructions; and when the computer-executable instructions are invoked by computer, the computer is caused to perform the method according to any one of claims 1 to 21.

26. A communication system, wherein the communication system comprises a first edge enabler server EES and a second EES, wherein
the second EES is configured to perform the method according to any one of claims 1 to 11; and
the first EES is configured to perform the method according to claim 12 or 13.

27. A communication system according to claim 26, wherein the communication system further comprises a first edge application server EAS and/or a second EAS, wherein
the first EAS is configured to perform the method according to claim 18; and
the second EAS is configured to perform the method according to claim 21.

28. The communication system according to claim 26 or 27, wherein the communication system further comprises a second UE, and the second UE is configured to perform the method according to any one of claims 14 to 17, or the second UE is configured to perform the method according to claim 19 or 20.
